Europäisches Patentamt

(19) European Patent Office

Office européen des brevets

(11) Publication number: **0 134 386**
A2

(12) # EUROPEAN PATENT APPLICATION

(21) Application number: **84101676.9**

(22) Date of filing: **17.02.84**

(51) Int. Cl.⁴: **G 06 F 9/44**

(30) Priority: **05.08.83 US 520568**

(43) Date of publication of application:
**20.03.85 Bulletin 85/12**

(84) Designated Contracting States:
**AT BE CH DE FR GB IT LI LU NL SE**

(71) Applicant: TEN X TECHNOLOGY, INC.
3933 Steck Avenue, Suite B-114
Austin Texas 78759(US)

(72) Inventor: Appelt, Daren R.
6460 Hart
Austin Texas 78731(US)

(74) Representative: Patentanwälte Grünecker, Dr.
Kinkeldey, Dr. Stockmair, Dr. Schumann, Jakob, Dr.
Bezold, Meister, Hilgers, Dr. Meyer-Plath
Maximilianstrasse 58
D-8000 München 22(DE)

(54) **Method and apparatus for executing object code instructions compiled from a high-level language source.**

(57) A high-level language processor is utilized in a system with a conventional host computer for executing object code instructions compiled from a high-level language source. Object code instructions specifying low-level operations (e.g., input/output, interrupt, and scheduling) are executed in the host computer in accordance with a stored emulator program. Upon identification by the emulator program of an object code instruction specifying a high-level operation, the language processor is activated. The central processing unit (CPU) in the language processor reads object code context section information from the host computer memory into a local memory. Using an instruction pointer in the context section, the language processor CPU reads the next high-level language object code instruction from the procedure section in the host computer memory and performs a required complex operation. Execution of the object program by the language processor continues until an input/output command is encountered, whereupon the information in the context section is written back into the host computer memory and an interrupt is issued to re-activate the emulator program. The emulator program then runs executing the input output command and continues until the next high-level language object code instruction is encountered. Object code context section information is switched back and forth in the foregoing manner between the host computer memory and the language processor local memory until the entire object program has been executed.

./...

FIG. 1

0134386

TENG:002

## METHOD AND APPARATUS FOR
## EXECUTING OBJECT CODE INSTRUCTIONS
## COMPILED FROM A HIGH-LEVEL LANGUAGE SOURCE

The present invention relates to processing of high-level language commands in a computer system; and more particularly, it relates to a hardware high-level language processor for use in a system with a conventional host computer.

Heretofore, when running a high-level language (e.g., COBOL, PASCAL, FORTRAN, BASIC) computer program, it has been necessary to use a compiler program to convert the program commands to object code or machine language. The object code is then executed by an emulator program in the computer system. Run times of such execution are lengthy because each high-level language object code command can require several hundred system memory cycles to execute. Improvements in computer system performance have been achieved by increases in memory size and memory access speed. Also, there have been improvements in the central processing unit (CPU). Along with these improvements, high-level language processing performance has correspondingly been improved, but the approach has remained the same.

In accordance with the present invention, a language processor is utilized in a system with a conventional host computer to execute object code instructions compiled from a high-level language source.  In accordance with the present invention, high-level language operations are performed in the language processor, and the low-level operations including input/output, interrupt, and scheduling operations are performed in the host computer.

Apparatus in accordance with the present invention comprises a host computer having a memory containing the compiled object code instructions.  The host computer executes in accordance with a stored emulator program only object code instructions specifying low-level operations. A language processor is coupled to the host computer and activated thereby upon identification by the emulator program of an object code instruction specifying a high-level operation.  The language processor accesses the host computer memory and executes the high-level instruction.

Before executing a program, the object code consisting of a procedure section, a data section, and a context section is placed in the host computer memory in the same manner as if the program were to be executed by the software emulator program.  The emulator program executes only those object code commands that specify a low-level operation.  Upon encountering an object code command in the program that requires a complex operation, the emulator program provides the address of the context section of the program to the language processor.  The emulator program then ceases operation, although the host computer may continue to attend to other ongoing input/output operations.  The language processor is activated by the setting of a pointer to the context section and reads the information from the context section of the object code.  Using an instruction pointer in the context section, the language processor reads the next object code command from the host computer memory and performs the required complex operations. Execution by the language processor of the object code program continues until a low-level operation object code command is encountered, whereupon the language processor writes the context section information back into the host computer memory and issues an interrupt to the host computer to re-activate the emulator program.

The operation of the system continues under the direction of the emulator program until the next complex object code command is encountered. Object code context section information is switched back and forth between the language processor in the host computer memory until the entire program has been executed.

The language processor may be coupled to the host computer over a system bus. The language processor includes a central processing unit (CPU), a control memory storing microcode commands for execution by the CPU and a local data memory. As indicated in the discussion of the method of the present invention for processing object code commands, the CPU of the language processor is activated upon identification by the emulator program in the host computer of an object code instruction specifying a high-level operation. Upon activation, the CPU accesses the host computer memory to read information from the context section of the object code and store it in the local data memory of the language processor. Thereafter, the CPU accesses the host computer memory using an instruction pointer in the stored context section information to read the next command from the procedure section of the object code and execute the specified high-level operation.

A written description setting forth the best mode presently known for carrying out the present invention, and of the manner of implementing and using it, is provided by the following detailed description of preferred embodiments which are illustrated in the attached drawings wherein:

Fig. 1 is a diagram of the operation of a system in accordance with the present invention for processing high-level language commands;

Fig. 2 is a diagram of the system concept illustrating the arrangement of system elements;

Fig. 3 is a diagram of object code context section switch operation;

Fig. 4 is a diagram of language processor functional elements: and

Fig. 5 is a schematic of circuitry for implementing the test and status logic block indicated in Fig. 4.

Detailed Description of a Preferred Embodiment

A.  Structure of High-Level Language Object Code

Languages are compiled into object programs that all have the same basic structure, regardless of language. There are three classes of data generated by a compiler to define an executable object program:  a procedure section, a data section, and a pseudo-machine context section.  The procedure section contains codes specifying which high-level language operations are to be performed and in what order.  The data section contains data to be acted upon and a place to put results.  The pseudo-machine context section contains information that completes the meaning of the codes in the procedure section and storage for temporary results.

In the Context Section, the Instruction Pointer is a value which points to the command in the Procedure Section which is to be executed next. The Accumulator(s) (and/or a Stack) are storage locations reserved for intermediate results left between commands. The Data Section pointers are values which indicate where in the Data Section various data items are located. The Status Flags are values which temporarily hold control information between commands. They along with the Instruction Pointer determine which commands are to be executed next.

In the conventional implementation of High-Level Languagess, an emulator program is run which performs, in software, the operations that need to be done to execute the program specified in the Procedure Section, above. Using the Instruction Pointer (from the Context Section) the emulator references a command in the Procedure Section. The command code is then decoded (by emulator software) to determine what action to perform on the Data and Context Sections. The emulator program then operates on the Data and Context Sections to perform the specified operation. When that is done, the sequence is repeated for the next command in the Procedure Section until the entire High-Level Language object program is completed. Examples are:

| Language Source | Compiled Object Code | Executed By Emulator |
|---|---|---|
| COBOL | POPS Commands | "POPS Interpreter" |
| PASCAL | P-Codes | "P-Code Machine Emulator" |

B.    System Concept

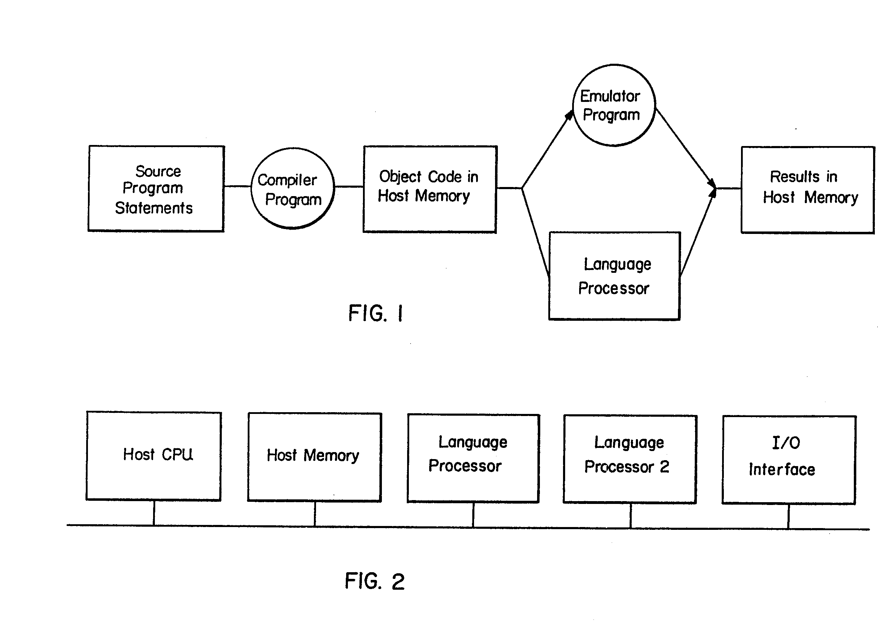

Referring now to Figs. 1-3, the system concept andoperation thereof in accordance with the present invention for processing high0level language commands is diagramed.  In Fig. 1, the operationindicated shows that source program statements are compiled using a compiler programinto object code stored inthe memory of a host computer.  Low-level operations including input/output, interrupt, and scheduling operations are executed using a software emulator program, and the results are stored in the host computer memory.  The complex or high-level operations in the program are specified by the object code in the host computer memory, and are executed by the hardware language processor.

Fig. 2 shows that the host central processing unit (CPU), the host computer memory, the language processor and the input/output interfaces coupling to peripheral devices are all coupled to a common system by memory bus. The bus may be, for example, in accordance with the UNIBUS used in computer systems made by the Digital Equipment Corporation.  Alternately, the system memory bus may be a TILINE bus system as utilized in the computer systems of Texas Instruments Inc.

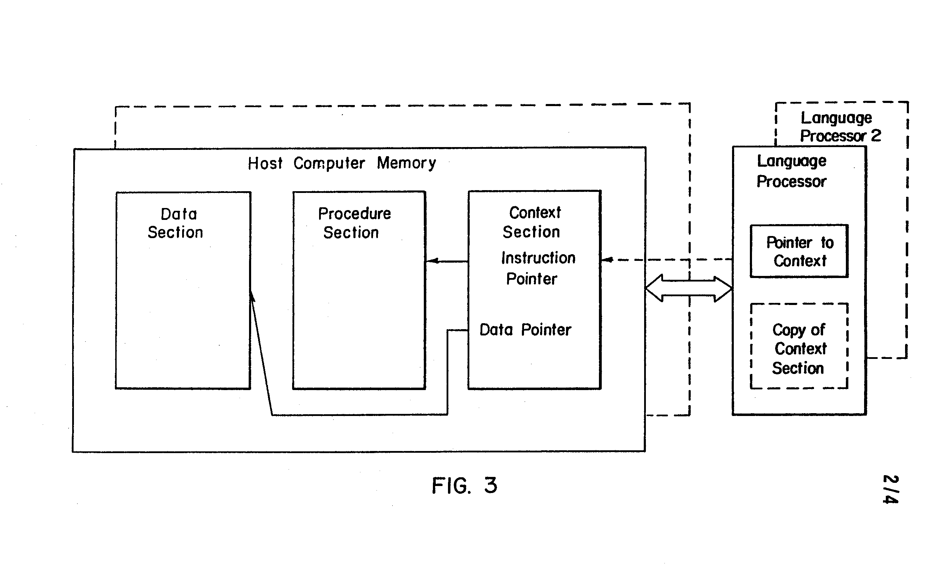

In Fig. 3, there is diagramed the host computer memory contents and the language processor central processing unit (CPU) and local data memory.  Fig. 3 is illustrative of the switching operation between the host computer memory and the language processor local data memory involving object code context section information. When the emulator program in the host computer·encounters an object code command in the data section which requires complex high-level language operations (i.e., the operations do not involve input/out, interrupt or scheduling operations), the emulator program places the address of the context section of the program in an interface register to the language processor. The emulator program then ceases operation, while allowing the host computer to attend to other ongoing input/output operations. The language processor CPU which is activated by the setting of a pointer to context reads the information from the context section of the host computer memory and places it into a local data memory in the language processor. Using the instruction pointer in the context section, the language processor CPU reads the next object code command from the procedure section of the object code and performs the required complex operations. The language processor continues to execute object code program commands until a low-level command is encountered. Upon identification of a low-level operation, the language processor CPU writes the context section information back into the host computer memory and issues an interrupt to the host computer to re-activate the emulator program. The emulator program then resumes operation and continues until another complex high-level language command is encountered in the object code program. Context section information is then switched back to the language processor. Switching of the context section back and forth between the host computer memory and the language processor local data memory continues until the entire program has been executed.

Operation in accordance with the present invention may include more than one language processor to provide even higher levels of performance and redundancy. This configuration is also illustrated in Figs. 2 and 3 wherein a second language processor is shown coupled to a first language processor. Operation in such a configuration may be required where the Host computer is run in a multi-programming mode. For operation with multiple language processors, the emulator program must be designed to assign an available language processor when a highlevel language instruction is bid to run. As used herein, the term "multi-programming" refers to the running of multiple programs using a single host computer.

### C. Language Processor Structure

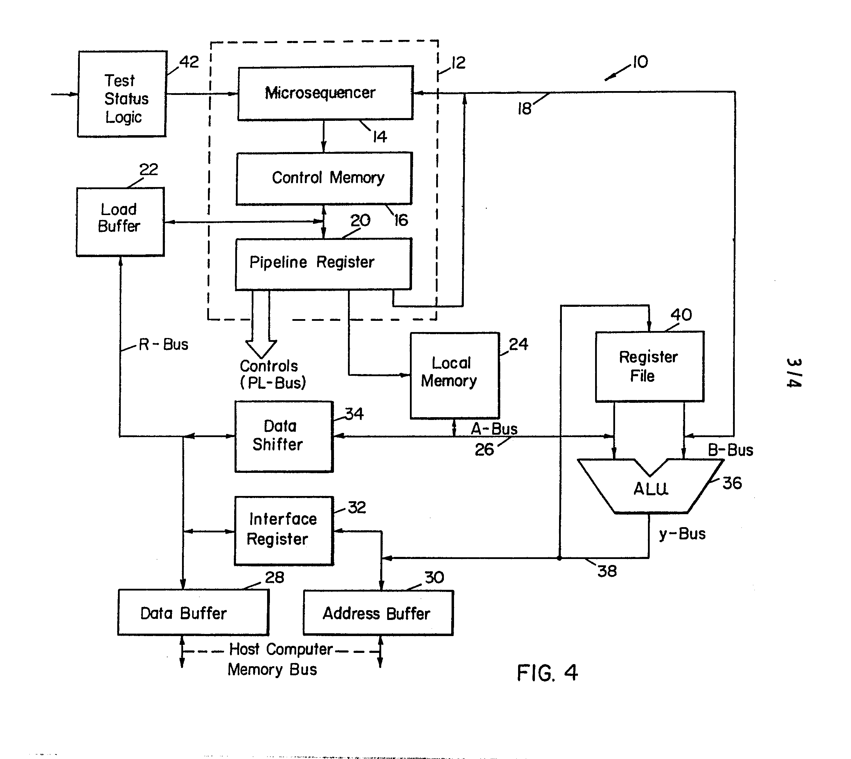

Referring now to Fig. 4, there is shown a functional diagram of the structure of the language processor. In general, the language processor comprises a CPU having control memory storing microcode commands that direct functional operations in the processing procedure. The microcode is initially loaded into the language processor by the host computer. Suitably, the microcode may be contained on a diskette and loaded into the language processor control memory from the diskette. The language processor may also be viewed as comprising two cooperative parts. These are a data path and a microcontroller. The data path includes those portions which perform operations on data, and the microcontroller includes those portions which provide the control commands to the data path portion.

In the language processor 10 shown in Fig. 4, the microcontroller portion 12 is shown to include a microsequencer 14 providing an address to control memory 16. The microinstruction pointer selects the next microinstruction to be executed. The microsequencer also contains logic to select the next value to be placed into the microinstruction pointer which value may either be an incremented current value or a new value loaded from B-bus 18 or from pipeline register 20.

Control memory 16 stores the microcode which determines the overall operation of the language processor. Each word is one microinstruction of the microcode. Microcode is loaded into control memory 16 through load buffers 22 comprising bi-directional data transfer logic. Preferably, control memory 16 is 8,192 words by 64-bits wide. Accordingly, load buffers 22 provide for the reading and writing of 64-bit wide words from the 16-bit host computer memory bus.

Pipeline register 20 is a 64-bit register used to hold the micro-command read from control memory 16. This register makes it possible for the language processor to overlap microinstruction fetch and execution. Outputs of pipeline register 20 are distributed as controls to other logic blocks within the language processor. Also, pipeline register 20 provides an address to local data memory 24.

Local data memory 24 comprises 1,024 registers, each of which is 16-bits wide. Data can be written into memory 24 or read out of memory 24 over the A-bus 26. Local data memory 24 functions to hold object code context section information which, of course, is switched between language processor 10 and the host computer.

Data buffers 28 and address buffers 30 couple to the host computer memory bus. These bi-directional drivers move data and memory address information respectively, between the host computer memory bus and the interface registers 32. The interface registers comprise four 16-bit registers containing information to be exchanged with the host computer memory bus. These four registers include a read/write data register, two memory address registers, and a status register.

The interface registers 32 interconnect with load buffers 22 and data shifter 34. The data shifter allows data read from interface registers 32 to be shifted right or left and masked in order to select decimal digits from the 16-bit word.

Bits implemented in the interface status register are accessible to both the Host computer and the language processor. They, along with an interrupt to the host, provide the control communication between the processor and programs in the host. The bits indicate conditions inside the processor to the host and allow the host to start and stop the processor. For example, an IDLE bit indicates to the host that the processor is not running. The processor FAULT bit provides the combination Host processor with redundant back-up in case the processor fails. A self-test microprogram in the processor is run before the processor is used. If it sets the FAULT bit, then the interpreter program in the host is run to execute all of the object program commands. Although execution is very slow, the system can still be used.

The A-bus 26 and the B-bus 1B present data to a decimal/binary arithmetic unit 36. Operations performed by the arithmetic unit are determined by commands from the microsequencer. The result of the operation is made available on the Y-bus 38. Preferably, the arithmetic unit is 16-bits or 4 decimal digits wide. The operations which arithmetic unit 36 is capable of performing include the following: binary or decimal addition or subtraction; all combinational logic operations; and left or right shifts.

Register file 40 contains registers providing storage of 16 words of data. The width of the register is 16-bits or 4 decimal digits. Any one of two registers can be selected to the Abus or the B-bus. A register selected to the B-bus may be loaded with data available on the Y-bus.

Finally, language processor 10 includes test and status logic 42. Control of microinstruction branching is by means of the test and status logic. This logic functions under control of the current microinstruction in pipeline register 20 to select some condition in the data path to be used in a determination of whether a microinstruction branch would be performed.

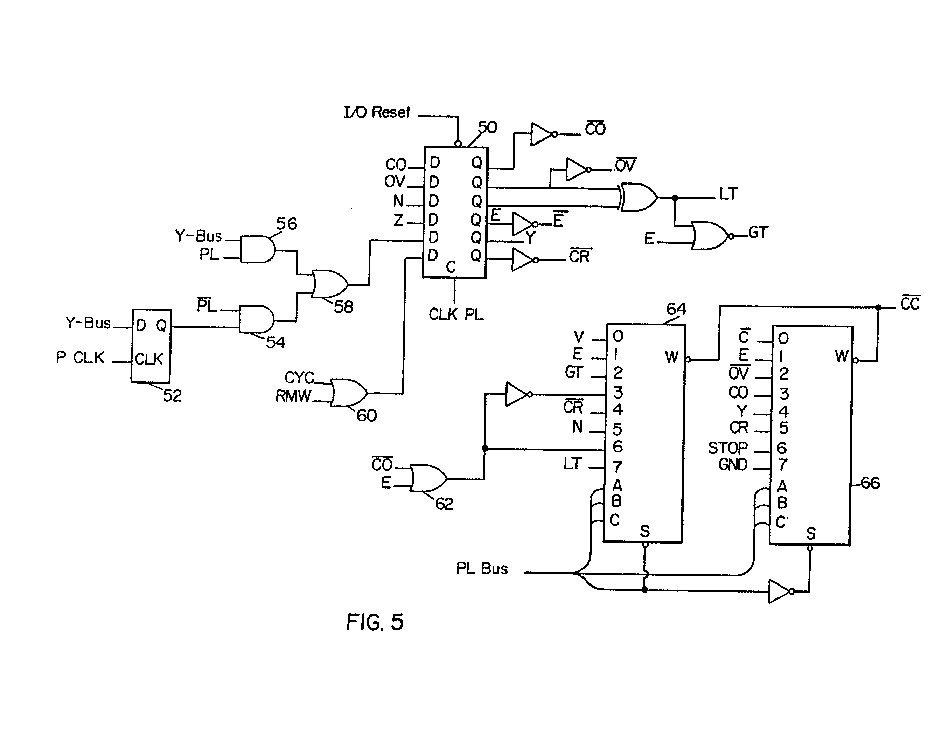

Referring to Fig. 5, a schematic diagram for test and status logic 42 is presented. This circuitry basically samples data signals using a set of flip-flops contained in device 50 (SN74LS174 device) and flip-flop 52. The direct inputs CO, OV, N and Z are from the arithmetic logic unit 36. Bit 15 of the Y-B bus is applied to flip-flop 52 and entered therein by an address logic clock controlled by bit 34 from the pipeline register 20. The Key output of flip-flop 52 is applied along with the compliment of bit 34 from a pipeline register 22 AND GATE 54. Bit 54 of the pipeline register and bit 15 of the Y-B bus are applied as inputs to AND GATE 56. OR GATE 58 receives the outputs of GATES 54 AND 56 and generates an output for entry in flip-flop device 50. The remaining input to flip-flop device 50 is from OR GATE 60 which receives the signals CYC and RMW which are derived from bits 0, 1, and 2 of the pipeline register 20. Flip-flop device 50 is clocked by the pipeline register clock.

The Key outputs of flip-flop device 50 are applied to various gates as shown to generate the indicated signals. These additional gates perform a re-coding function to provide a more diverse set of microcode jump commands. For example, the combination of the EQ signal (Y-B bus = 0) and the CO (no carry) signal in OR GATE 62 provides a re-coded signal indicating the Y-B bus is less than or equal to 0.

The re-coded signals are applied to selector circuits 64 and 66 (SN74LS251 devices). Pipeline register bits 5, 6 and 7 determine which of the 16 inputs will be tested. The output signal CC is applied to microsequencer 14 to indicate whether or not a microcode jump is to be performed.

D. Components For Implementing Language Processor Structure

Microsequencer 14 is made from an AM2910 integrated circuit described in the 1982 Integrated Circuit Catalog from Advanced Micro Devices Corporation.

Control memory 16 is made from MBB168-70 integrated circuits described in the 1982 catalog from Fujitsu Corporation, 2985 Kifer Road, Santa Clara, Calif. 95051.

Pipeline register 20 is made from SN74LS374 integrated circuits described in the 1982 Integrated Circuits Catalog from Texas Instruments Inc. of Dallas, Texas.

Local data memory 24 is made from AM2149 integrated circuit memories described in the 1983 Integrated Circuit Catalog from Advanced Micro Devices.

The arithmetic unit 36 can be realized using four AM29203 four-bit expandable bipolar microprocessor slice integrated circuit devices available from Advanced Micro Devices.  Register file 40 is part of the AM29203 device.

Data shifter 34 is realized using SM74LS253 multiplexors available from Texas Instruments, Inc.

Microcode load buffers 22 are implemented using SN74LS245 integrated circuit devices available from Texas Instruments, Inc.  Buffers 22 are coupled to data shifter 34 and interface register 32 over the R-bus.

The status register portion of interface register 32 can be made of SN74LS399 integrated circuit devices. Output data drivers for driving the host computer memory bus can be SN74LS244 devices.  The address registers can be SN74LS670 devices.  The data register is made of AM2957 devices.  Data buffers for driving the R-Bus can be SN74LS244 devices.  Address buffers are suitably SN74LS670 devices.  All of these devices are available from Texas Instruments except the AM2957 which is available from Advanced Micro Devices.

E.    Microcode For COBOL Language Processor

The following microcode listing is for operation of the language processor 10 diagrammed in Figs. 1-4 to execute object code instructions compiled from COBOL source program statements.  The following code particularly adapts the language processor to interface as a common peripheral device to DX10, DNOS, or COS 990 operating systems used in the computer series available from Texas Instruments, Inc.  In such an installation, the language processor replaces the COBOL Interpreter to execute COBOL POPS commands directly in hardware.  The microcode is in machine language form.

| | | | |
|---|---|---|---|
| 0000 | 6000009E8C700008 | 0031 | E000008D0DD00002 |
| 0001 | 6000009E8C700010 | 0032 | 7E7A069E85D00000 |
| 0002 | 6000009E8C70001E | 0033 | 60000260B5D00000 |
| 0003 | 7F12008D85D0000E | 0034 | 6000009E8C7E01B0 |
| 0004 | 7F0A028DA59000CC | 0035 | 60000060B7D00000 |
| 0005 | E00004BAC5D007FE | 0036 | 6000009E8C7D01B0 |
| 0006 | 7EC0488845D0020C | 0037 | 7E56069E85D00000 |
| 0007 | 60001888C5D0018C | 0038 | 7E2E069E85D00000 |
| 0008 | 644D988845D001CE | 0039 | 6000008D0DD00002 |
| 0009 | 6000009E8C300260 | 003A | E00462882D300169 |
| 000A | 6455988845D00150 | 003B | 60000260B5D00000 |
| 000B | 645D988845D0016E | 003C | 6000009E8C7E01F0 |
| 000C | 6465988845D0015E | 003D | 60000060B7D00000 |
| 000D | 6000408D0D900018 | 003E | 7E1C068D847D01F0 |
| 000E | 6000009E8C300280 | 003F | 6000008D0DD00002 |
| 000F | 646D988845D0017E | 0040 | E0000288ADD00000 |
| 0010 | 6475988845D0012C | 0041 | 7E7A069E85D00000 |
| 0011 | 647D988845D0010C | 0042 | 616C608D0DD00000 |
| 0012 | 6000009E8D90005C | 0043 | 7E00068D847D021B |
| 0013 | 6000009E8C300260 | 0044 | 6164608D0C700A30 |
| 0014 | 64B5988845D0029E | 0045 | 6000009E8D90009B |
| 0015 | 648D988845D0020E | 0046 | 7E00068D847D0230 |
| 0016 | 6495988845D0021E | 0047 | 60000260A5D00000 |
| 0017 | 6000009E8C7D00BE | 0048 | 7E90009E8C7E0250 |
| 0018 | 7F0A0286C5D003C0 | 0049 | 60000060B7D00000 |
| 0019 | 7F12008D85900154 | 004A | E00460880D300233 |
| 001A | 60000888C5D0020C | 004B | 6000009E8C700A30 |
| 001B | 7EC0808D0C7D00D6 | 004C | 7E00068DB47D0260 |
| 001C | 60000288ADD00000 | 004D | 6004628027D00001 |
| 001D | E0000888BDD00002 | 004E | FE80008D05300266 |
| 001E | 649D988845D00220 | 004F | 6000009E8D500000 |
| 001F | 64A5988845D002CC | 0050 | 7E06068D847D02B0 |
| 0020 | 6000009E8C300260 | 0051 | 7E58068D847702CB |
| 0021 | 64AD988845D002D0 | 0052 | 6004628027D00001 |
| 0022 | 64B580B0DD00000 | 0053 | 7E80008D05D00006 |
| 0023 | 7E00068D847D011B | 0054 | FE46068D85D00000 |
| 0024 | 6004608D0DD00001 | 0055 | 7E18068D847702D0 |
| 0025 | 6000009E8C7D012B | 0056 | 6004608D0DD00001 |
| 0026 | 7F0A0286E5D003B0 | 0057 | 7E80009E8D3002B0 |
| 0027 | 7F12008D85900046 | 0058 | 6000009E8D500000 |
| 0028 | E0000888C5D00200 | 0059 | 6000469E04700290 |
| 0029 | 60E20092CDD00080 | 005A | 6000469E047002B0 |
| 002A | 7EC0808D0C7C022B | 005B | 6000009E8C7D02DB |
| 002B | 60E20084CFD000F0 | 005C | 7F12008D85D00002 |
| 002C | 6000009E8C740228 | 005D | 7F0A028DA59000BB |
| 002D | 7E1C068D847D016B | 005E | 6002068D85D00000 |
| 002E | 60000260A5D00000 | 005F | 9F04649105D00000 |
| 002F | 7E90009E8C7E0188 | 0060 | 60000488C5D0000B |
| 0030 | 60000060B7D00000 | 0061 | 7EC0408D0C3006DB |

```
0062  6000009E8D900018        0093  6000009E8C700848
0063  6000009E8C300700        0094  6000009E8C7024E8
0064  6002068D847D0321        0095  6000009E8C705520
0065  7F04628027D00000        0096  6000009E8C700848
0066  9E80008D05D00006        0097  6000009E8C700848
0067  6000009E8D900048        0098  6000009E8C700848
0068  6000009E8C3006D8        0099  6000009E8C700848
0069  60000888C5D00200        009A  6000009E8C700848
006A  6000009E8C7D0350        009B  60000A8184701E80
006B  7F0A0286C5D003B0        009C  6000009E8C700848
006C  7F12008D8590004C        009D  6000009E8C700848
006D  7EC080BD0C3006D8        009E  6000009E8C700848
006E  6000009E8C7D0370        009F  6000009E8C700848
006F  7F0A0286C5D003C0        00A0  6000009E8C700848
0070  7F12008D85900044        00A1  6000009E8C706250
0071  60000888C5D001F8        00A2  6001382D0470624B
0072  60E20092CDD00080        00A3  60001228847061C0
0073  7EC080BD0C7C06A0        00A4  6000009E8C703DE0
0074  60E200B4CFD000F0        00A5  6000009E8C700848
0075  6000009E8C7406A0        00A6  6000009E8C7036D0
0076  6002068D85D00001        00A7  6000009E8C706120
0077  7F04626005D00000        00A8  63DA1286AC70608
0078  7E1C0A8D847E03D0        00A9  6000009E8C700848
0079  6000006087D00000        00AA  6000009E8C706090
007A  7E360A9E847D03D0        00AB  60000A8184700C08
007B  6000208D2DD00000        00AC  6000009E8C7061C8
007C  9F04A0880DD00002        00AD  6000009E8C700848
007D  60000260B5D00000        00AE  6000009E8C700978
007E  7F04608D0C7E0600        00AF  602A188DB47008A0
007F  6000006086700600        00B0  63DA1286AC7008C8
0080  6000009E8C700848        00B1  6022188D847008B0
0081  6000009E8C700848        00B2  6001408D0C700958
0082  6000009E8C700848        00B3  6022188D84700890
0083  6000009E8C700848        00B4  6000009E8C705200
0084  6000009E8C700848        00B5  63DA1286AC7008E8
0085  6000009E8C700848        00B6  6000009E8C700848
0086  6000009E8C700848        00B7  6000009E8C70391B
0087  6000009E8C700848        00B8  6000009E8C700848
0088  6000009E8C704BB8        00B9  6000009E8C700848
0089  6000009E8C704BD0        00BA  6000009E8C705808
008A  6000009E8C704BE8        00BB  6000009E8C700848
008B  6000009E8C705148        00BC  6000009E8C706178
008C  6000009E8C702FD8        00BD  6000009E8C7031C0
008D  6000009E8C702FB8        00BE  6000009E8C700848
008E  6000009E8C702F98        00BF  6000009E8C700848
008F  6000009E8C7050A8        00C0  7E5C0A8D85D00000
0090  6000009E8C704A58        00C1  7E760A9E847D0608
0091  6000009E8C703210        00C2  7E90008D0DD00002
0092  63DA1286AC70608        00C3  9F04A2882D3003B0
```

| | | | |
|---|---|---|---|
| 00C4 | 6002068D85D00001 | 00F5 | 7E46148D86FF0000 |
| 00C5 | 7F04626005D00000 | 00F6 | 60001E6087D00000 |
| 00C6 | 6000009E8C7E0640 | 00F7 | 7E00132D847D07B8 |
| 00C7 | 7F04606007D00000 | 00F8 | 60001491B4FF0000 |
| 00C8 | 7E1C068D85D00000 | 00F9 | E362008D8DD00006 |
| 00C9 | 7E1A069E847D0648 | 00FA | 607DFE8007D00000 |
| 00CA | 6000008D0DD00002 | 00FB | 7E18128D847D07D8 |
| 00CB | 9F0462882DD00000 | 00FC | 7E581A32C5D00BF8 |
| 00CC | 7E90026085D00000 | 00FD | 7E061A8D8CCF0000 |
| 00CD | 6162068D847E0678 | 00FE | 635A1E86AC770800 |
| 00CE | 6000006087D00000 | 00FF | 60001328B4FF0000 |
| 00CF | 7F04608D0DD00000 | 0100 | E362008D8DD00006 |
| 00D0 | 6000009E8C7D0680 | 0101 | 7E46128D85D00000 |
| 00D1 | 6000008D0DD00002 | 0102 | 6001FE8645D0001B |
| 00D2 | 8000208D2DD00000 | 0103 | 6000009E8C7D0818 |
| 00D3 | 6000009E8C700750 | 0104 | 7E58133EB5D00000 |
| 00D4 | 6000009E8D900098 | 0105 | 7E46148D86FF0000 |
| 00D5 | 6002068D847D06A9 | 0106 | 6001408D0DD00000 |
| 00D6 | 60000260A5D00000 | 0107 | 6000009E8C74085B |
| 00D7 | 7E90009E8C7E06C8 | 0108 | 60001E6084700858 |
| 00D8 | 6000006087D00000 | 0109 | 607A1E8D85D00000 |
| 00D9 | 9F0460880D3006AA | 010A | 7F58009E8DD00000 |
| 00DA | 6000009E8C700750 | 010B | 629A1E828FD00000 |
| 00DB | 6002068D847D06D9 | 010C | 6000009E8C780B70 |
| 00DC | 7F04628027D00000 | 010D | 62EA1E8684700878 |
| 00DD | 8000008D05D00006 | 010E | 62521E8685D00000 |
| 00DE | 7E80009E8D3006D8 | 010F | 607DE09E0C7002DB |
| 00DF | 6000009E8D500000 | 0110 | 6000009E8C74076B |
| 00E0 | 6002068D847D0701 | 0111 | 6000009E8C700978 |
| 00E1 | 7F04608D0DD00000 | 0112 | 6000009E8C7C076B |
| 00E2 | 7E46068D85D00000 | 0113 | 6000009E8C700978 |
| 00E3 | 7E80009E8DD00000 | 0114 | 60001B6087D00000 |
| 00E4 | 60020A8D85D00001 | 0115 | 602D808D0C780BB8 |
| 00E5 | 7F04A08D0DD00000 | 0116 | 6000009E8C70076B |
| 00E6 | 7E18069E85D00000 | 0117 | 60001B9185D00000 |
| 00E7 | 7F04628027D00000 | 0118 | 602D808D0C700978 |
| 00E8 | 9E80008D05300706 | 0119 | E3E2008D8DD00006 |
| 00E9 | 6000009E8D500000 | 011A | 7E00008D8C7D0BD0 |
| 00EA | 7F50009E8C7D0750 | 011B | 6000009E8C74076B |
| 00EB | 7F40009E88100000 | 011C | 6000009E8C7009A0 |
| 00EC | 6000009E8C7D0760 | 011D | E3E2008D8DD00006 |
| 00ED | 7F055488047B0830 | 011E | 7E0002BD847D08F0 |
| 00EE | 635A1E86AC7407CB | 011F | 60001B9184740768 |
| 00EF | 6362008D8DD00006 | 0120 | 9F0598B105D00000 |
| 00F0 | 7E581A32C5D00BF8 | 0121 | 629A02828E7D090B |
| 00F1 | E001F88447D00010 | 0122 | 7F04208D0C7809A0 |
| 00F2 | 7E061A8D8CCF0000 | 0123 | 62A212828FD00000 |
| 00F3 | 607D9E80677070B0 | 0124 | 60921886847E09A0 |
| 00F4 | 7E58132D847D07A0 | 0125 | 6095809E0C77093B |

```
0126  6000009E8C7009A0          0157  607A1E8D85D00000
0127  8000009E8DD00000          0158  60001891B5D00000
0128  6000009E8C7D0940          0159  64DD809E0DD00000
0129  6001988D07D0000C          015A  6535809E0DD00000
012A  6095809E0C70084E          015B  643D988845D00010
012B  602DF88104740970          015C  642D809E0DD00000
012C  60001E6085D0000C          015D  60001888C5D00058
012D  602DE09E0DD00000          015E  6435809E0DD00000
012E  6035809E0C70097E          015F  60001888C5D001F8
012F  62B212828E700980          0160  641D809E0DD00000
0130  638A1286AC7E0990          0161  60001888C5D007C0
0131  E392008D8C7009A6          0162  7F05809E0DD00000
0132  639A1286ADD00000          0163  7E60188D85D00000
0133  E3A2008D8C7009A6          0164  6425809E0DD00000
0134  7E001E8D847D09A0          0165  62521E8287D00000
0135  6000009E8C770848          0166  629A1E828FD00000
0136  629A1E828FD00000          0167  60001E88847809A8
0137  6000009E8C7809E0          0168  62521E8685D00000
0138  637A188D85D00000          0169  62EA1E8287D00000
0139  635D9E862DD00000          016A  6001E08D0C7009A8
013A  6382188D85D00000          016B  640A008685D00000
013B  6365809E0C700A00          016C  6412028D85D00004
013C  636A188D85D0000C          016D  60001A9E8CD00000
013D  635D9E862DD00000          016E  640A008685D00000
013E  6372188D85D00000          016F  6412028D85D00004
013F  6365809E0C700A00          0170  60001A9E8CD00000
0140  635A1E86AC790A10          0171  636C1A8007D00000
0141  60001491847007 68         0172  6374209E0D500000
0142  E362008D8DD00006          0173  637C1A8007D00000
0143  60001E8087D00000          0174  6384209E0D500000
0144  7E46148D847D0A20          0175  639C1A8007D00000
0145  60001488867007 68         0176  63A4209E0D500000
0146  60001A88C5D00B88          0177  638C1A8007D00000
0147  633A188D847D0A38          0178  6394209E0D500000
0148  7F05809E0DD00000          0179  63BC1A8007D00000
0149  7E22188D85D00000          017A  63C4209E0D500000
014A  7E3C108D85D00000          017B  63AC1A8007D00000
014B  6001988605D00000          017C  63B4209E0D500000
014C  6001108605D00004          017D  63CC1A8007D00000
014D  640D809E0DD00000          017E  63D4209E0D500000
014E  6415009E0DD00000          017F  63DC1A8007D00000
014F  62520 08D84300B58          0180  63E4209E0D500000
0150  62EA008D84300B58          0181  6000009E8C301F48
0151  62F2008D84300B58          0182  60000291 84300C20
0152  626A008D84300B58          0183  6000009E8C70076B
0153  62E2008D84300B58          0184  60DA1C2D85D00000
0154  6282008D84300B58          0185  6001DCB645D00C38
0155  627A008D84300B70          0186  610A1C8D84D00000
0156  625A008D84300B70          0187  642A0C8D84701B58
```

```
018B  642A0C8D84701AB8          01B9  60FD6A8804700F90
0189  60000C81847016F8          01BA  E0000A8884300EA0
018A  6000009E8C700848          01BB  7E901C6086790DF8
018B  60000C81847016F8          01BC  6432168D847D0DE0
018C  6000189184701A50          01BD  6000009E8C301078
018D  60000C81847016F8          01BE  60FD6A8804700F90
018E  6000009E8C700848          01BF  6432168D847D0DF8
018F  642A0C8D84700CB8          01C0  6000009E8C3010B8
0190  642A0C8D84701180          01C1  60FD6A8804700F90
0191  642A0C8D84700CB8          01C2  E0000A8884300EA0
0192  642A0C8D84701180          01C3  6000009E8C790E38
0193  6000009E8C700848          01C4  6432168D847D0E20
0194  642A0C8D84701348          01C5  6000009E8C301088
0195  E000009E8C701938          01C6  60FD6A8804700F90
0196  E000009E8C7019A8          01C7  6432168D847D0E38
0197  6001DA8645D00CC8          01C8  6000009E8C3010F8
0198  60001A9184D00000          01C9  60FD6A8804700F90
0199  60000C6084700D70          01CA  E0000A8884300EA0
019A  60000C6084700D90          01CB  7E901C6084790E78
019B  60000C6084700E10          01CC  6432168D847D0E60
019C  60000C6084700DD0          01CD  6000009E8C301068
019D  60000C6084700E50          01CE  60FD6A8804700F90
019E  60000C6086700D90          01CF  6432168D85D00000
019F  60000C6086700E10          01D0  60001C8087D00000
01A0  60000C6086700DD0          01D1  7E6E1A8D847D0E88
01A1  60000C6086700E50          01D2  6000009E8C3010E8
01A2  60000C8884700D90          01D3  60FD6A8804700F90
01A3  60000C8884700E10          01D4  60001A91847C0EB0
01A4  60000C8884700DD0          01D5  6162029E84700F20
01A5  60000C8884700E50          01D6  6000D88645D00ED0
01A6  60000C8886700D90          01D7  6000CC8247D001F8
01A7  60000C8886700E10          01D8  7EC0D89104D00000
01A8  60000C8886700DD0          01D9  61FDA09E0DD00000
01A9  60000C8886700E50          01DA  61F5A09E0DD00000
01AA  60000C8086700D90          01DB  61EDA09E0DD00000
01AB  60000C8086700E10          01DC  61E5A09E0DD00000
01AC  60000C8086700DD0          01DD  61DDA09E0DD00000
01AD  60000C8086700E50          01DE  61D5A09E0DD00000
01AE  60000C6087D00000          01DF  61CDA09E0DD00000
01AF  60000A8884300EA0          01E0  61C5A09E0DD00000
01B0  60001888C5D00058          01E1  61BDA09E0DD00000
01B1  60FD8A8804700F90          01E2  61B5A09E0DD00000
01B2  E0000A8884300EA0          01E3  6164209E0D500000
01B3  60001C8886790DB8          01E4  6000D88645D00F40
01B4  6432168D847D0DA0          01E5  6000CC8247D00158
01B5  6000009E8C3010A0          01E6  7EC0D89104D00000
01B6  60FD6A8804700F90          01E7  615DA09E0DD00000
01B7  6432168D847D0DB8          01E8  6155A09E0DD00000
01B8  6000009E8C3010C8          01E9  614DA09E0DD00000
```

```
01EA  6145A09E0DD00000        021B  60001280A7D00000
01EB  613DA09E0DD00000        021C  E0000088884701016
01EC  6135A09E0DD00000        021D  60001280A7D00000
01ED  612DA09E0DD00000        021E  E0000088884701046
01EE  6125A09E0DD00000        021F  60001280A7D00000
01EF  611DA09E0DD00000        0220  E0000088884701056
01F0  6115A09E0DD00000        0221  7E1C188D85D00000
01F1  6164209E0D500000        0222  6005809E0C700FE1
01F2  60001A91B5540000        0223  7E7A189E85D00000
01F3  610A188D85D00000        0224  7E1C189E85D00000
01F4  6005809E0DD00000        0225  6005809E0C701141
01F5  600DA09E0DD00000        0226  7E5C189E85D00000
01F6  60EA188D85D00000        0227  6005809E0C701149
01F7  60F5809E0DD00000        0228  60000891855D0000
01F8  60FA188D85D00000        0229  60000881855D0000
01F9  6105809E0DD00000        022A  600012608471170
01FA  60DA188D85D00000        022B  60001280A7D00000
01FB  60E5809E0D5D0000        022C  E000008D05D00006
01FC  60001C888871106B        022D  7E5C188D80711178
01FD  7E2E188D85D00000        022E  7E1C188D85D00000
01FE  7E561B9E85D00000        022F  60FD8A8804700F90
01FF  60001C6085D00000        0230  6001DA8645D0119B
0200  60001CBBB0711090        0231  60001C6087D00000
0201  7E7A1B9E85D00000        0232  60001A91B4D00000
0202  7E1C189E85D00000        0233  60000C6084700D70
0203  60059C6004700FE1        0234  60000C6084700D70
0204  60001C8880711DAE        0235  60000C6084701240
0205  7E5C189EB5D00000        0236  60000C60847012C8
0206  7E6E1ABD85D00000        0237  60000C6084701280
0207  60059C6005D00001        0238  60000C6084701308
0208  60001CBBBB71107E        0239  60000C6086701240
0209  7E161B8D85D00000        023A  60000C60867012C8
020A  7E3A189E85D00000        023B  60000C6086701280
020B  6001BB9E05D00000        023C  60000C6086701308
020C  60001C6084701020        023D  60000C8884701240
020D  7E801280A674114C        023E  60000C88847012C8
020E  E0000088847D0FEE        023F  60000C8884701280
020F  7E801280A674114E        0240  60000C8884701308
0210  E000008884701040        0241  60000C8886701240
0211  60001C6085D00000        0242  60000C88867012C8
0212  60001280A674111E        0243  60000C8886701280
0213  E000008BB4701000        0244  60000C8886701308
0214  60001C6085D00000        0245  60000C8086701240
0215  60001280A6741130        0246  60000C80867012C8
0216  E000008BB470102E        0247  60000C8086701280
0217  7E801280A7D00000        0248  E0000A8884300EA0
0218  E0000088847D0FF6        0249  60001C8886791268
0219  60001C6085D00000        024A  6000009E8C7D1250
021A  6000009E8C74110B        024B  6000009E8C3010A0
```

```
024C  60000888847011S0        027D  60001C6086791408
024D  6000009E8C7D126B        027E  6000009E8C7D13F0
024E  6000009E8C3010CB        027F  60001280A7D00000
024F  6000088884701150        0280  E0000088847015OE
0250  E0000A8884300EA0        0281  7E7C188D85D00000
0251  7E901C6087D00000        0282  6000009E8C7D1410
0252  6000009E8C7912B0        0283  60001280A7D00000
0253  6000009E8C7D1298        0284  E0000088847015D6
0254  60001C8884301078        0285  E0000A8884300EA0
0255  6000088884701150        0286  6000009E8C791440
0256  6000009E8C7D12B0        0287  7E70188D80711638
0257  6000009E8C3010BB        0288  7E32188D85D00000
0258  6000088884701150        0289  6000009E8C7D1448
0259  E0000A8884300EA0        028A  60001280A7D00000
025A  6000009E8C7912F0        028B  E0000088885D00006
025B  6000009E8C7D12D8        028C  6000009E88711568
025C  6000009E8C3010B8        028D  E0000A8884300EA0
025D  6000088884701150        028E  60001C6084791490
025E  6000009E8C7D12FC        028F  6000009E8C7D147B
025F  6000009E8C3010F8        0290  60001280A7D00000
0260  6000088884701150        0291  E0000088847015CE
0261  E0000A8884300EA0        0292  7E32188D847D1490
0262  7E901C6084791330        0293  60001280A7D00000
0263  6000009E8C7D131B        0294  E0000088885D00006
0264  60001C8884301068        0295  7E90009E8DD00000
0265  6000088884701150        0296  6000009E88711558
0266  7E6E1A8D847D1330        0297  E0000A8884300EA0
0267  6000009E8C3010EB        0298  60001C60847914E0
0268  6000088884701150        0299  7E78188D847D14C8
0269  6001DC2D05D00000        029A  60001280A7D00000
026A  6001DA8645D01360        029B  E0000088847015D6
026B  60001A9184D00000        029C  7E3A188D847D14E0
026C  60000C6084700D70        029D  60001280A7D00000
026D  60000C60847013BB        029E  E0000088885D00006
026E  60000C6084701428        029F  7E90009E8DD00000
026F  60000C60867013EC        02A0  6000009E88711558
0270  60000C6086701466        02A1  7E3C189E85D00000
0271  60000C8884701SEC        02A2  7E221A8D85D00000
0272  60000C8884701468        02A3  60059C6005D00001
0273  60000C88867013E0        02A4  60001C8880711548
0274  60000C8886701468        02A5  7E3C1A9E85D00000
0275  60000C80867013E0        02A6  7E22188D85D00000
0276  60000C80867014BB        02A7  6005BC6005D00001
0277  E0000A8884300EA0        02A8  60001C888071155B
0278  60001C88867913D0        02A9  7E801280A6741698
0279  6000009E88711568        02AA  E0000088847015ZE
027A  7E7C188D847D13D0        02AB  7E801280A6741688
027B  6005809E0C7016D1        02AC  E0000088847015OE
027C  E0000A8884300EA0        02AD  7E3C189E85D00000
```

0134386

```
02AE   7E221A8D85D00000        02DF   6001DA8645D01708
02AF   60059C6005D00001        02E0   60001A9184D00000
02B0   60001C88807115AB        02E1   6001CC8D04700D70
02B1   7E3C1A9E85D00000        02E2   6001CC3E047017B0
02B2   7E22188D85D00000        02E3   6001CC2604701818
02B3   6005BC6005D00001        02E4   6001CC3E047017D0
02B4   60001C88807115BB        02E5   6001CC2604701858
02B5   7E8012B0A67416AB        02E6   6001CC3E047017D0
02B6   E0000088847015BE        02E7   6001CC2604701858
02B7   7E8012B0A67416AB        02E8   6001CC3E047017D0
02B8   E000008884701 56E       02E9   6001CC2604701858
02B9   7E70189E85D00000        02EA   6001CC3E047017D0
02BA   7E6E1A8D85D00000        02EB   6001CC2604701858
02BB   60059C6005D00001        02EC   6001CC3E047017D0
02BC   60001C8880711608        02ED   6001CC2604701858
02BD   7E701A9E85D00000        02EE   6001CC3E047017D0
02BE   7E6E188D85D00000        02EF   6001CC2604701858
02BF   6005BC6005D00001        02F0   6001CC3E047017D0
02C0   60001C888071161B        02F1   6001CC2604701858
02C1   7E8012B0A67416C0        02F2   6001CC3E047017D0
02C2   E0000088847015EE        02F3   6001CC2604701858
02C3   7E8012B0A67416B0        02F4   6001CC3E047017D0
02C4   E0000088847015CE        02F5   6001CC2604701858
02C5   7E70189E85D0000C        02F6   E0000A8884300EA0
02C6   7E6E1A8D85D00000        02F7   60001C88867917C8
02C7   60059C6005D00001        02F8   6000009E887118A0
02C8   60001C8880711668        02F9   7E18188D80711908
02C9   7E701A9E85D00000        02FA   E0000A8884300EA0
02CA   7E6E188D85D00000        02FB   60001C88867917F8
02CB   6005BC6005D00001        02FC   6000009E8C7D17E0
02CC   60001C8880711678        02FD   60001280A7D00000
02CD   7E8012B0A67416D0        02FE   E0000088847018A6
02CE   E000008884701 64E       02FF   7E18188D85D00000
02CF   7E8012B0A67416D0        0300   6000009E8C7D1800
02D0   E0000088847016 2E       0301   60001280A7D00000
02D1   7E3C189E85D00000        0302   E0000088807119OE
02D2   6005809E0C7016A9        0303   E0000A8884300EA0
02D3   7E3C1A9E85D00000        0304   6000009E8C791830
02D4   6005A09E0DD00001        0305   6000009E887119C0
02D5   7E5C188D847016DB        0306   7E46188D85D0000C
02D6   7E70189E85D00000        0307   6000009E8C7D183B
02D7   6005809E0C7016D1        0308   60001280A7D00000
02D8   7E701A9E85D00000        0309   E000008885D00006
02D9   6005A09E0DD00001        030A   6000009E887118A0
02DA   7E1C188D85D00000        030B   E0000A8884300EA0
02DB   600180824FD0006B        030C   6000009E8C791880
02DC   6000009E8C7416F0        030D   6000009E8C7D1868
02DD   6001989845D0005B        030E   60001280A7D00000
02DE   60FD8A8804700F90        030F   E0000088847019O6
```

```
0310  7E46188D847D1880      0341  60FDBA91047D1A0B
0311  60001280A7D00000      0342  7E58189E84701A30
0312  E000008885D00006      0343  60001A88C5D0005B
0313  6000009E88711BA0      0344  60FDBA91047D1A20
0314  7E58189E85D00000      0345  7E58189E84701A30
0315  7E461A8D85D00000      0346  604D8A8B05D00000
0316  60059C6005D00001      0347  6000009E8D540000
0317  60001C88807118E0      0348  6045809E0DD00000
0318  7E581A9E85D00000      0349  6165AA8804700FAB
0319  7E46188D85D00000      034A  60001088C5D000B0
031A  6005BC6005D00001      034B  60DD009E0DD00000
031B  60001C88807118F0      034C  60ED988A47D00098
031C  7E801280A6741928      034D  610A048D85D00000
031D  E00000888847018C6      034E  6001848605D00000
031E  7E801280A6741928      034F  6000009E8C771AB0
031F  E0000088847018A6      0350  6000048887D00000
0320  7E00188885D00000      0351  610A188D85D00000
0321  60059C6005D00001      0352  6000588207D00000
0322  60001C8880711918      0353  610D9C8D05D00000
0323  7E801280A6741928      0354  6000528625D00000
0324  E000008884701906      0355  6000008885D00006
0325  60001888C5D0005B      0356  642A0C8D84700CBB
0326  60FD8A8804700F90      0357  60001C88C5D00090
0327  7E58188D847D193B      0358  610DDC2645D00010
0328  60001280A7D00000      0359  60001888C5D000B0
0329  E000008885D00006      035A  60DD809E0DD00000
032A  7E461A8D85D00000      035B  7E1C008DBDD00000
032B  7E181A8D84771970      035C  7E0A188D84741B40
032C  60DD809E0DD00000      035D  64FD8C8007D00000
032D  60EDA09E08711988      035E  60000A888C300EA0
032E  60DD988A45D007FB      035F  7E1C188D847D1AFB
032F  60019A9E05D00000      0360  7E3A189E85D00000
0330  60EDA09E08711988      0361  60059C6005D00001
0331  60001888C5D000A0      0362  7E80009E8DD00000
0332  610D928027D00000      0363  7E56189E85D00000
0333  6000008D05D00006      0364  7E6E189E85D00000
0334  7E00028D84700C20      0365  60059C6005D00001
0335  6000009E8C7919E0      0366  7E80009E8C7C1B2B
0336  7E00188D847D19B0      0367  6000009E8C701928
0337  6000009E8C7719D0      0368  60000C8185D00000
0338  60001A88C5D00058      0369  6000A08D0C300EA0
0339  60FDBA9104701A30      036A  6000009E8C701928
033A  60001A88C5D00068      036B  60000C8087D00000
033B  60FDBA9104701A30      036C  60000A888C300EA0
033C  7E46188D847D19E0      036D  609A188D85D00000
033D  60001280A67719FB      036E  640A1886ADD00000
033E  E000008884701A1E      036F  E412008D8DD00006
033F  E000008885D00006      0370  60000E9185D00000
0340  60001A88C5D00068      0371  60000291B5D00000
```

```
0372  6000049185D00000
0373  6000069185D00000
0374  6000089185D00000
0375  60001688C5D00050
0376  7E001C8D847D1BB0
0377  64EDC09E0C305658
0378  638A128DA5D00000
0379  E392008D8DD00002
037A  64DC8C8845D00090
037B  6000009185D00000
037C  60001888C5D00058
037D  60FD809E0DD00000
037E  64EA1C8D847D1BF0
037F  60001280A7D00000
0380  E392008D8DD00006
0381  7E58188D85D00000
0382  7E18108D85D00000
0383  64BD809E0DD00000
0384  64C5009E0DD00000
0385  6001DA8645D00800
0386  7EC1A09E0DD00000
0387  7E58188D847D1C38
0388  64CD9A8845D01C50
0389  6000009E8C701CE8
038A  7E1C008D84701CE8
038B  7E3A009E84701CE8
038C  7E56009E84701CE8
038D  7E6E009E84701CE8
038E  7E1C028D84701CE8
038F  7E3A029E84701CE8
0390  7E56029E84701CE8
0391  7E6E029E84701CE8
0392  7E1C048D84701CE8
0393  7E3A049E84701CE8
0394  7E56049E84701CE8
0395  7E6E049E84701CE8
0396  7E1C068D84701CE8
0397  7E3A069E84701CEE
0398  7E56069E84701CEE
0399  7E6E069E84701CE8
039A  7E1C088D84701CE8
039B  7E3A089E84701CE8
039C  6000009E8C701DF8
039D  7E901C6087D00000
039E  6802108D84771DF9
039F  7F05009E0DD00000
03A0  64C210828FD00000
03A1  7E1A188D84741D50
03A2  644A18882BFD00000
03A3  7E1C16B4BE7C1D50
03A4  6000009E8C7E1D90
03A5  60000C6087D00000
03A6  60000E888C771D90
03A7  6000009E8C721D48
03A8  60000E6087D00000
03A9  60001A8886D00000
03AA  646210828FD00000
03AB  64CA10828E741DC8
03AC  64BA10828E741DD8
03AD  64C210828E741CE8
03AE  646A10828E741CE8
03AF  648210828E741CE8
03B0  6000009E8C741CE8
03B1  6000009E8C701D90
03B2  6302128D85D00000
03B3  6000009E8C741CE8
03B4  65420C8D85D00000
03B5  6000CC9104740848
03B6  6544C09E0DD00000
03B7  653A0C8D85D00000
03B8  60BCC09E0C700B48
03B9  60001888C5D0006B
03BA  60FD809E0C701CE8
03BB  6000E08D0DD00000
03BC  6000009E8C771DF0
03BD  60000E8886701CE8
03BE  60000E8A86701DE8
03BF  60000E6087D00000
03C0  6000009E8C771E18
03C1  60000E8A87D00000
03C2  60ECE09E0C701E18
03C3  60000A888DD00000
03C4  6000009E8C741E58
03C5  61FC009E0DD00000
03C6  61F4209E0DD00000
03C7  61EC409E0DD00000
03C8  61E4609E0DD00000
03C9  61DC809E0DD00000
03CA  60000A888C700F90
03CB  615C009E0DD00000
03CC  6154209E0DD00000
03CD  614C409E0DD00000
03CE  6144609E0DD00000
03CF  613C809E0C701E50
03D0  6000009E8C301F48
03D1  6000029184300C20
03D2  6000009E8C301EA0
03D3  6000009E8C700768
```

```
03D4  60E20082CFD000F0      0405  640A1286AC7022A8
03D5  60001A81847C1EC8      0406  6000009E8C700848
03D6  600DA09E0C3043A8      0407  640A1286AC7022E8
03D7  603A1C8D85D00000      0408  640A1286AC702130
03D8  6000009E8C701EE8      0409  640A1286AC702158
03D9  60021C8D85D00000      040A  643D809E0DD00000
03DA  60E20092CDD00090      040B  7E001898C5D03FF8
03DB  6000009E8C7C1EE8      040C  6445809E0DD00000
03DC  6001DC6007D00000      040D  640A1286ADD00000
03DD  640A008D85D00000      040E  E412008D8DD00006
03DE  7F0A188D85D00000      040F  6000128086701F98
03DF  6001808407D00000      0410  60DA0092CDD00008
03E0  6000008645D003C0      0411  6000009E8C7C2228
03E1  60F20E8D85D00000      0412  7E101898C5D03FF8
03E2  6000009E8C771F28      0413  6000009E8C7C20C0
03E3  6001C08207D00000      0414  640A1286ADD00000
03E4  6000FC8604701F30      0415  E412008D8DD00006
03E5  6001C08207D00000      0416  6000128087D00000
03E6  608C009E0DD00000      0417  7E00188D847D20B8
03E7  6085D88845D000A0      0418  602A04CD85D00000
03E8  60CD809E0D500000      0419  602A008D8C746A58
03E9  62B212828FD00000      041A  6000009E8C776A58
03EA  626A1286B4781F68      041B  640A1286ADD00000
03EB  626A128287D00000      041C  E412008D8DD00006
03EC  62F2128685D00000      041D  60001A88C5D00060
03ED  640A1286ADD00000      041E  60DDA09105900078
03EE  E412008D8DD00006      041F  6000128087D00000
03EF  6000128087D00000      0420  7E00028D847D2100
03F0  6D000E9185D00000      0421  6000200005302108
03F1  609CE09E0DD00000      0422  6000008D0DD00000
03F2  6544E09E0DD00000      0423  60018287047C6A58
03F3  7E2C0E8D847D1F98      0424  7F04209E0C7E6A58
03F4  64220F3884771FB0      0425  6000009E8C702250
03F5  60DCEE2D04701FC0      0426  E412008D8DD00006
03F6  60000E8887D00000      0427  7E00128D847D2138
03F7  60DCEE2D05D00000      0428  627A1286B5D00000
03F8  6000EE8645D01FD0      0429  640A1286A5D00000
03F9  60000E9184D00000      042A  6412008D85500006
03FA  6000009E8C702178      042B  E412008D8DD00006
03FB  60ECEE8D06702210      042C  7E781A38C5D003F8
03FC  6000009E8C702178      042D  7E181898C5D000F8
03FD  6000009E8C700848      042E  603DA09E0C702280
03FE  6000009E8C702178      042F  7E100138C5D03FF8
03FF  6000009E8C702228      0430  62B200828E7C21B0
0400  6000009E8C702080      0431  640A1286ADD00000
0401  6000188184702050      0432  E412008D8DD00006
0402  640A1286AC7022A8      0433  6000128087D00000
0403  640A1286AC7022A8      0434  7E00012D847D21A0
0404  640A1286AC7022A8      0435  62B200828FD00000
```

0134386

```
0436  626A0086847821CB        0467  6000009E8C700B4B
0437  626A008287D00000        0468  6282128785D00000
0438  62F20086847021CB        0469  640A1286A5D00000
0439  640A0086ADD00000        046A  6412008D85500006
043A  E412008D8DD00006        046B  62E2028685D00000
043B  609C008007D00000        046C  6000328D05D00000
043C  60DA0098CDD007F0        046D  640A1286A5D00000
043D  6000009E8C7C21F8        046E  6412008D85500006
043E  609C009E087122A0        046F  60BA0C8D85D00000
043F  7E00188D847D21F8        0470  653CD68105D00000
0440  640A1286ADD00000        0471  6545609E0DD00000
0441  E412008D8C702286        0472  60BA008685D00000
0442  610CF26007D00000        0473  62C2188D847E6A58
0443  640A1286A5D00000        0474  627A108D85D00000
0444  6412008D85500006        0475  60BD009E0C702478
0445  7E100098CDD03FF8        0476  62D2188D85D00000
0446  6000009E8C7C2268        0477  6442012D84746A58
0447  640A1286ADD00000        0478  640A1886ADD00000
0448  E412008D8DD00006        0479  E412008D8DD00006
0449  6000128087D00000        047A  6000188087D00000
044A  7E00188D847D2250        047B  6000126085D00000
044B  640A1286ADD00000        047C  600018C60DD00000
044C  E412008D8C702286        047D  7E0000828E7D23E8
044D  640A1286ADD00000        047E  640A1286AC7E6A58
044E  E412008D8DD00006        047F  E412008D8DD00006
044F  7E101898C5D03FF8        0480  7E00188D85D00000
0450  610D809E0DD00000        0481  60BA0C8D85D00000
0451  60ECE09E0DD00000        0482  653CD68105D00000
0452  6000128087D00000        0483  6545609E0DD00000
0453  7E00008D80712308        0484  60018E8705D00000
0454  640A1286ADD00000        0485  60BA008D847D2428
0455  E412008D8DD00006        0486  7E00008685D00000
0456  7E781838C5D003F0        0487  6000009E8C7E6A58
0457  7E181A98C5D000F8        0488  640A0087ADD00000
0458  60018 0984DD00100       0489  E412008D8DD00006
0459  610DB280067422D8        048A  7E00188D847D2450
045A  641A189E85D00000        048B  640A0E86ADD00000
045B  60ED809E0DD00000        048C  E412008D8DD00006
045C  7E00008D80712308        048D  60BD809E0DD00000
045D  E412008D8DD00006        048E  7E00188D847D2470
045E  7E781838C5D003F0        048F  610A128D85D00000
045F  7E181B38C5D000F8        0490  60DA0082CFD000D0
0460  6000009E8C7022C0        0491  60000291847424D0
0461  643A188D85D00000        0492  6000128605D00000
0462  643CE09E0C7C23B0        0493  6000009E8C7E24E0
0463  62C200C28FD00000        0494  600138840FD00000
0464  62CA0283 86782378      0495  6000009E8C7624E0
0465  62DA02828E782340        0496  60BA00C68DD00000
0466  6000009E8C782358        0497  60BC209E0DD00000
```

| | |
|---|---|
| 0498 | 640A1287A5D00000 |
| 0499 | 6412008D85500006 |
| 049A | 6001322D05D00000 |
| 049B | 6432008D8C702488 |
| 049C | 60BCC09E0C706A58 |
| 049D | 6000009E8C302520 |
| 049E | 60017CC40E742510 |
| 049F | 601A132D85D00000 |
| 04A0 | 6000189184740760 |
| 04A1 | 601D808D0C700978 |
| 04A2 | 60001A89843026F8 |
| 04A3 | 6000009E8C700760 |
| 04A4 | 6000009E8C301F48 |
| 04A5 | 64F400880DD00000 |
| 04A6 | 60012C8D043046A0 |
| 04A7 | 60DA0084CFD000F0 |
| 04A8 | 6000009E8C7426D8 |
| 04A9 | 60DA0084CFD000E0 |
| 04AA | 6000009E8C7426E8 |
| 04AB | 610A168D85D00000 |
| 04AC | 60DA1092C5D00090 |
| 04AD | 60EA1C8D847C2578 |
| 04AE | 60001660870000000 |
| 04AF | 60F21C8287D00000 |
| 04B0 | 6000009E8C772590 |
| 04B1 | 6000009E8C7025B0 |
| 04B2 | 60001A88C5D00200 |
| 04B3 | 7EC1BA9105900020 |
| 04B4 | 6005A08D0DD00001 |
| 04B5 | 7E80009E8D3025A0 |
| 04B6 | 60017C8605D00000 |
| 04B7 | 6001C22D047225D0 |
| 04B8 | 6000029185D00000 |
| 04B9 | 60001C9185D00000 |
| 04BA | 601A132D85D00000 |
| 04BB | 7EC0808D0C7C25F0 |
| 04BC | 60720098CDD007F8 |
| 04BD | 6000109185540000 |
| 04BE | 6002108D85D00001 |
| 04BF | 6000222D05D00000 |
| 04C0 | 6000288247D00200 |
| 04C1 | 6000228247D00048 |
| 04C2 | 7EC09C882DD00000 |
| 04C3 | 7E90009E8C792648 |
| 04C4 | 6001C0924DD00010 |
| 04C5 | 6002108D84742639 |
| 04C6 | 7F05008D0C702688 |
| 04C7 | 7F05008D0DD00000 |
| 04C8 | 600022840E702690 |
| 04C9 | 6001C0924DD00010 |
| 04CA | 6002108D84742669 |
| 04CB | 7F05109105D00000 |
| 04CC | 7E4E108D84702690 |
| 04CD | 7F05109105D00000 |
| 04CE | 7E0E048D8470269B |
| 04CF | 6002108D85D00001 |
| 04D0 | 7F05008D0DD00000 |
| 04D1 | 7E46108D85D00000 |
| 04D2 | 7E06048D847C26BB |
| 04D3 | 7E900260867C26C0 |
| 04D4 | 6000108A847C267B |
| 04D5 | 616210848FD00000 |
| 04D6 | 60001091855C0000 |
| 04D7 | 6072109E847026D0 |
| 04D8 | 6072049E85D00000 |
| 04D9 | 6074448D05500000 |
| 04DA | 6075108D05500000 |
| 04DB | 601A132D85D00000 |
| 04DC | 6162108DB47C26F0 |
| 04DD | 6000109185500000 |
| 04DE | 6001108D05500000 |
| 04DF | 60DA0084CFD00010 |
| 04E0 | 60000A9184742F90 |
| 04E1 | 60DA0232C5D000FB |
| 04E2 | 6102088D85900008 |
| 04E3 | 6000228645D02728 |
| 04E4 | 6000029E8CD00000 |
| 04E5 | 64F2008D84702AE0 |
| 04E6 | 64F2008D84702768 |
| 04E7 | 64F2008D84702B30 |
| 04E8 | 64F2008D8470084B |
| 04E9 | 64F2008D8470284B |
| 04EA | 64F2008D8470284B |
| 04EB | 64F2008D84702B30 |
| 04EC | 64F2008D84702B30 |
| 04ED | 6162028D85D00000 |
| 04EE | 7F042C802FD00000 |
| 04EF | 800000BD0DD00006 |
| 04F0 | 60F20298C5D007F8 |
| 04F1 | 60E2048D85D00000 |
| 04F2 | 7F04408D0DD00000 |
| 04F3 | 7E46029E847D2798 |
| 04F4 | 7F042C882DD00000 |
| 04F5 | 8000008B8DD00002 |
| 04F6 | 60E20084CFD000F0 |
| 04F7 | 604218BD847C27D0 |
| 04F8 | 6000CC8645D00020 |
| 04F9 | 6000008D04702AEC |

| | |
|---|---|
| 04FA | 60001888C5D000B0 |
| 04FB | 60F20298C5D007F8 |
| 04FC | 60DD808D0DD00000 |
| 04FD | 7F05808D0DD00000 |
| 04FE | 7E46029E847D27F0 |
| 04FF | 7F042C882DD00000 |
| 0500 | 800000888DD00002 |
| 0501 | 6000CC8645D00020 |
| 0502 | 6000008D05D00004 |
| 0503 | 60000E88C5D001D8 |
| 0504 | 7EC0F68845D00098 |
| 0505 | 6002108D84702949 |
| 0506 | 60000A88C5D00180 |
| 0507 | 7F04A08D0DD00000 |
| 0508 | 7E4E0A9E85D00000 |
| 0509 | 6001C42447D00008 |
| 050A | 6000042885D00000 |
| 050B | 60004E8247D001F8 |
| 050C | 6001D09245D00018 |
| 050D | 6001108645D02878 |
| 050E | 7EC0F08D0CD00000 |
| 050F | 6002108D84702949 |
| 0510 | 6002108D847029C1 |
| 0511 | 6002108D847028E9 |
| 0512 | 6002108D84702899 |
| 0513 | 6000009E8C302F70 |
| 0514 | 7E76028D84792A00 |
| 0515 | 60001660870000000 |
| 0516 | 6000009E8C742988 |
| 0517 | 7E5C029E84302930 |
| 0518 | 7F05166007D00000 |
| 0519 | 7E36028D847C29D0 |
| 051A | 60DA0292C5D00090 |
| 051B | 6000A898455C0100 |
| 051C | 6102089E80712F18 |
| 051D | 7E80009E8C302F70 |
| 051E | 6002188D85D00001 |
| 051F | 7E56028D84792AA8 |
| 0520 | 7F05966007D00000 |
| 0521 | 6001908D04742988 |
| 0522 | 7E3C029E84302930 |
| 0523 | 7F05166007D00000 |
| 0524 | 7E16028D847C295B |
| 0525 | 6000009E8C7028D0 |
| 0526 | 6000A29E047D2930 |
| 0527 | 7F042C8027D00000 |
| 0528 | 8000008D05500006 |
| 0529 | 6000009E8C302F70 |
| 052A | 7E16028D84792A38 |

| | |
|---|---|
| 052B | 7E80166087D00000 |
| 052C | 6002188D84742989 |
| 052D | 7E7C029E84302930 |
| 052E | 7F05166007D00000 |
| 052F | 7E56028D847C2900 |
| 0530 | 6000009E8C7028D0 |
| 0531 | 60001888C5D07900 |
| 0532 | 7F05808D0DD00000 |
| 0533 | 7E2E189E85D00000 |
| 0534 | 60018A9805D00000 |
| 0535 | 60DA0092CDD00090 |
| 0536 | 6000A29E04742F50 |
| 0537 | 6000009E88712F28 |
| 0538 | 6000009E8C302F70 |
| 0539 | 7E36028D84792A70 |
| 053A | 7E80166087D00000 |
| 053B | 6002108D84742989 |
| 053C | 7E1C029E84302930 |
| 053D | 7F05166007D00000 |
| 053E | 7E76028D847C28AB |
| 053F | 6000009E8C7028D0 |
| 0540 | 7E3C028D85D00000 |
| 0541 | 6000A29E047D2A0B |
| 0542 | 60000C6086302F40 |
| 0543 | 60001660870000000 |
| 0544 | 6000009E8C7428D0 |
| 0545 | 6000009E8C7D2A2B |
| 0546 | 7F05008D0C702950 |
| 0547 | 7E5C028D85D00000 |
| 0548 | 6000A29E047D2A40 |
| 0549 | 60000C6086302F40 |
| 054A | 60001660870000000 |
| 054B | 6000009E8C7428D0 |
| 054C | 6000009E8C7D2A60 |
| 054D | 7F05008D0C7029CB |
| 054E | 7E7C028D85D00000 |
| 054F | 6000A29E047D2A7B |
| 0550 | 60000C6086302F40 |
| 0551 | 7E80166087D00000 |
| 0552 | 600200CD8C7428D1 |
| 0553 | 6000009E8C7D2A9B |
| 0554 | 7F051889047028FB |
| 0555 | 7E1C028D85D00000 |
| 0556 | 6000A29E047D2AB0 |
| 0557 | 60000C6086302F40 |
| 0558 | 60001660870000000 |
| 0559 | 6000009E8C7428D0 |
| 055A | 6000009E8C7D2AD0 |
| 055B | 7F05908D047028A0 |

0134386

```
055C  6042188D85D00000        058D  6002108D85D00001
055D  7F05808D0DD00000        058E  7F05008D0DD00000
055E  7E40028D847D2AF0        058F  7E81768447D00020
055F  6000C08D2DD00000        0590  7E58029E84772D00
0560  6000008D0C792B12        0591  6000009E8C302930
0561  8000009E8D500000        0592  7F05008D0DD00000
0562  DF04208D0DD00000        0593  7E46028D84702C6B
0563  6000009E8C7D2B18        0594  60000A9184302F70
0564  7F042C8827D00000        0595  6000448645D02DA0
0565  A004008D0D500006        0596  7E016608E792E50
0566  6001C42447D00008        0597  7E22028D847C2CCB
0567  6000042885D00000        0598  7E2E028D84702F18
0568  60004E8247D001F8        0599  6002108D85D00001
0569  6001C69245D00018        059A  7F05008D0DD00000
056A  6000788645D02B78        059B  7E81768447D00020
056B  6001649245D00018        059C  7E3C029E84772D00
056C  6000009E8C742B70        059D  6000009E8C302930
056D  6000448D07D00000        059E  7F05008D0DD00000
056E  7EC0F88D0CD00000        059F  7E22028D84702CCB
056F  6002108D84702CA1        05A0  6000788645D02D10
0570  6002108D84702C41        05A1  6000189E8CD00000
0571  6002108D84702BE1        05A2  7F04248D0CD00000
0572  6002108D84702B99        05A3  7F04248D0CD00000
0573  60000A9184302F70        05A4  7F04248D0CD00000
0574  6000448645D02D30        05A5  7F04248D0CD00000
0575  600016608E792E10        05A6  7E02028D85D00000
0576  7E0E028D847C2BC0        05A7  6000829E04702930
0577  6000009E8C702F18        05A8  7E0E028D84702F18
0578  7E81768447D00020        05A9  7E0E028D84702F18
0579  7E00028D84772D00        05AA  6000009E8C702D58
057A  6002108D84302931        05AB  7E02028D85D00000
057B  7F05008D0C702BC0        05AC  6000829E04702930
057C  60000A9184302F70        05AD  7E02028D85D00000
057D  6000448645D02DD8        05AE  6000829E04702930
057E  7E016608E792ED0        05AF  7E0E028D84702F18
057F  7E6E028D847C2C08        05B0  7E0E028D84702F18
0580  6000009E8C702F18        05B1  6000009E8C702D90
0581  6002108D85D00001        05B2  7E02028D85D00000
0582  7F05008D0DD00000        05B3  6000829E04702930
0583  7E81768447D00020        05B4  7E02028D85D00000
0584  7E70029E84772D00        05B5  6000829E04702930
0585  6000009E8C302930        05B6  7E0E028D84702F18
0586  7F05008D0DD00000        05B7  7E0E028D84702F18
0587  7E6E028D84702C08        05B8  6000009E8C702DCB
0588  60000A9184302F70        05B9  7E02028D85D00000
0589  6000448645D02D6B        05BA  6000829E04702930
058A  7E016608E792E90        05BB  7E02028D85D00000
058B  7E46028D847C2C6B        05BC  6000829E04702930
058C  7E4E028D84702F18        05BD  7E0E028D84702F18
```

```
05BE  7E0E028D84702F18        05EF  6000CC6025D00000
05BF  6000009E8C702E00        05F0  7F05008D0D5E0000
05C0  7E02028D85D00000        05F1  6000006087500000
05C1  6000829E04702930        05F2  64FA0A8D84702830
05C2  7E5A028D847C2E20        05F3  6000009E8C302FF8
05C3  6000829E00712F40        05F4  6000009E8C303018
05C4  7E80166085D00000        05F5  6000009E8C7431B0
05C5  7E40028D847D2E28        05F6  6000009E8C7031A0
05C6  6000009E8C302F40        05F7  6000009E8C302FF8
05C7  6000448007D00000        05F8  6000009E8C303018
05C8  6000009E8C7D2E40        05F9  6000009E8C7531B0
05C9  7F0516600E702C58        05FA  6000009E8C7031A0
05CA  7E7A028D847C2E60        05FB  6000009E8C302FF8
05CB  6000829E00712F40        05FC  6000009E8C303018
05CC  60001660B5D00000        05FD  6000009E8C7231B0
05CD  7E7A028D847D2E68        05FE  6000009E8C7031A0
05CE  7E7C029E84302F40        05FF  6000009E8C301F48
05CF  6000448007D00000        0600  6000029185D00000
05D0  6000009E8C7D2E80        0601  60000A9184300C20
05D1  7F0516600E702BF8        0602  6000009E8D500000
05D2  7E1A028D847C2EA0        0603  60E2188D85D00000
05D3  6000829E00712F40        0604  60DA0084CFD000F0
05D4  7E18028D847D2EA0        0605  60DA18848E7C3068
05D5  6002108D84302F41        0606  6000009E8C7C3108
05D6  6000448007D00000        0607  6042188D85D00000
05D7  60001660B5D00000        0608  604A18848FD00000
05D8  6000009E8C7D2EC0        0609  604A188486773060
05D9  7F0516600E702BB0        060A  6000189185540000
05DA  7E3A028D847C2EE0        060B  60001888C5500008
05DB  6000829E00712F40        060C  6000188185500000
05DC  6002108D85D00001        060D  60E20084CFD000E0
05DD  7F05166005D00000        060E  60F2188D84723108
05DE  7E3C029E847D2EF0        060F  60EA18848FD00000
05DF  7E80009E8C302F40        0610  6000009E8C7C3108
05E0  6000448007D00000        0611  6000009E8C303F68
05E1  6000009E8C7D2F08        0612  6000188184304030
05E2  7F0516600E702CB8        0613  6001208D0C7830D0
05E3  7F04808D0DD00000        0614  6001008D0C7C30D8
05E4  7E46029E847D2F20        0615  6000E08D0C7C30D8
05E5  6000009E8C7D2F28        0616  6000C08D0C7C30DB
05E6  7F042C8027D00000        0617  6000A08D0C7C30DB
05E7  A000008D05500006        0618  6000009E8C7C30D8
05E8  7F042C8027D00000        0619  6000189185500000
05E9  C000008D05500006        061A  6000188A87D00000
05EA  7F04808D0DD00000        061B  61020084CFD00068
05EB  7E1C029E847D2F58        061C  6000009E8C7C30F0
05EC  7F042C8027D00000        061D  6000188A87D00000
05ED  8000008D05500006        061E  6001808D0D500000
05EE  6000009E8C7D2F70        061F  6000188185520000
```

| | |
|---|---|
| 0620 | 6000188A87500000 |
| 0621 | 6000009E8C303228 |
| 0622 | 6000009E8C303138 |
| 0623 | 6000189185540000 |
| 0624 | 61020084CFD00058 |
| 0625 | 6000188185540000 |
| 0626 | 6000188A87500000 |
| 0627 | 61FA008D8DD00000 |
| 0628 | 61F2008D8C7C3198 |
| 0629 | 61EA008D8C7C3198 |
| 062A | 61E2008D8C7C3198 |
| 062B | 61DA008D8C7C3198 |
| 062C | 61D2008D8C7C3198 |
| 062D | 61CA008D8C7C3198 |
| 062E | 61C2008D8C7C3198 |
| 062F | 61BA008D8C7C3198 |
| 0630 | 61B2008D8C7C3198 |
| 0631 | 60001891847C3198 |
| 0632 | 6045808D0D500000 |
| 0633 | 6000188184703190 |
| 0634 | 6000189185D00000 |
| 0635 | 6025809E08710768 |
| 0636 | 6000188185D00000 |
| 0637 | 6025809E08710768 |
| 0638 | 6000009E8C302FF8 |
| 0639 | 6000009E8C3031D8 |
| 063A | 6000009E8C700768 |
| 063B | 6000009E8C304348 |
| 063C | 6000009E8C7C3298 |
| 063D | 6042188D85D00000 |
| 063E | 604A188685D00000 |
| 063F | 6001808D0C7A3260 |
| 0640 | 6000009E8C304388 |
| 0641 | 6000009E8C7031D8 |
| 0642 | 6000009E8C302FF8 |
| 0643 | 6000009E8C303228 |
| 0644 | 6000009E8C700768 |
| 0645 | 6000009E8C304348 |
| 0646 | 6000009E8C7C3288 |
| 0647 | 6042188D85D00000 |
| 0648 | 604A188287D00000 |
| 0649 | 6001808D0C7A3260 |
| 064A | 6000009E8C304388 |
| 064B | 6000009E8C703228 |
| 064C | 6045809E0C753278 |
| 064D | 60001888C5D00058 |
| 064E | 6105809E0D500000 |
| 064F | 60001888C5D0006B |
| 0650 | 6105809E0D500000 |
| 0651 | 60FA1896C5D00030 |
| 0652 | 60FD809E0DD00000 |
| 0653 | 60F2188D85D00000 |
| 0654 | 60EA18848FD00000 |
| 0655 | 60EA18848E743318 |
| 0656 | 6000009E8C773310 |
| 0657 | 6000009E8C303EF0 |
| 0658 | 6000009E8C303F40 |
| 0659 | 6000009E8C303FE0 |
| 065A | 6000009E8C303F90 |
| 065B | 60EA00CD8DD00000 |
| 065C | 60ED988905D00000 |
| 065D | 60F5809E0DD00000 |
| 065E | 610200CD8DD00000 |
| 065F | 60FA168D85D00000 |
| 0660 | 6105768905D00000 |
| 0661 | 60FD609E0DD00000 |
| 0662 | 60EA008D84304058 |
| 0663 | 6000009E8C303F18 |
| 0664 | 6000009E8C303F68 |
| 0665 | 60FA188D85D00000 |
| 0666 | 610218848FD00000 |
| 0667 | 6000009E8C7C3370 |
| 0668 | 6000009E8C304008 |
| 0669 | 7E1E096084783414 |
| 066A | 7E1E076084783414 |
| 066B | 7E1E056084783414 |
| 066C | 7E1E036084783414 |
| 066D | 7E1E016084703414 |
| 066E | 6000009E8C304030 |
| 066F | 7E1E09E0847E3414 |
| 0670 | 7E1E07E0847E3414 |
| 0671 | 7E1E05E0847E3414 |
| 0672 | 7E1E03E0847E3414 |
| 0673 | 7E1E01E0847E3414 |
| 0674 | 600133E047D00000 |
| 0675 | 600111E045D00004 |
| 0676 | 6000EFE045D00004 |
| 0677 | 6000CDE045D00004 |
| 0678 | 6000ABE045D00004 |
| 0679 | 600089E045D00004 |
| 067A | 600067E045D00004 |
| 067B | 600045E045D00004 |
| 067C | 600023E045D00004 |
| 067D | 600001E045D00004 |
| 067E | 6000009E8C303FB8 |
| 067F | 6000009E8C303FE0 |
| 0680 | 6000009E8C3042F8 |
| 0681 | 6000009E8C703420 |

```
0682  6000009E8C303FB8        06B3  7E1C0084CFD00000
0683  6000009E8C303FE0        06B4  6000009E8C743670
0684  60F20082CFD00000        06B5  7E1C0084CFD00020
0685  60F2188D84723438        06B6  6000009E8C743638
0686  6000009184304058        06B7  7E1C0084CFD00040
0687  60000088C5D00140        06B8  6000009E8C743600
0688  60001688C5D00020        06B9  7EC1BA60063042C8
0689  60001A88C5D001B0        06BA  7E3C168D85D00000
068A  7EC1BA8807D00000        06BB  7EC1BA60063042C8
068B  6002028D85D00001        06BC  7E22169E843042E8
068C  7F04209E0C7C34A0        06BD  6001C0844FD001D0
068D  6001608207D00000        06BE  6000009E8C7235D0
068E  7EC1BA8806723458        06BF  6000009E8C703698
068F  6000009185D00000        06C0  7EC1BA60063042C8
0690  60F4009E0DD00000        06C1  7E58168D85D00000
0691  6044008807D00000        06C2  7EC1BA60063042C8
0692  60Q4008845D00058        06C3  7E46169E843042E8
0693  6104009E0D500000        06C4  6001C0844FD001D0
0694  7E0E008D8DD00000        06C5  6000009E8C723608
0695  6000009E8C7C34D8        06C6  6000009E8C703698
0696  7E16008D8DD00000        06C7  7EC1BA60063042C8
0697  60000060867C34D8        06C8  7E70168D85D00000
0698  7E1A008D8DD00000        06C9  7EC1BA60063042C8
0699  60000060867C34D8        06CA  7E6E169E843042E8
069A  6000006087D00000        06CB  6001C0844FD001D0
069B  6000188185D00000        06CC  6000009E8C723640
069C  6045809E0DD00000        06CD  6000009E8C703698
069D  6004028D05D00000        06CE  7EC1BA6007D00000
069E  60F2008685D00000        06CF  6002168D85D00001
069F  6000008884743518        06D0  7EC1DC6007D00000
06A0  6000009E8C723518        06D1  6001C0844FD001D0
06A1  6000028207D00000        06D2  6005609E0C723671
06A2  6004209E0DD00000        06D3  60017698450D07FF8
06A3  6000228447D00098        06D4  61DD609105D00000
06A4  60F2168D85530000        06D5  61D4009E0DD00000
06A5  6000368605D00000        06D6  61CC009E0DD00000
06A6  600160824FD00000        06D7  61C4009E0DD00000
06A7  6000009E8C723548        06D8  61BC009E0DD00000
06A8  6165809E0DD00000        06D9  61B4009E0D500000
06A9  6002188D85D00000        06DA  6000009E8C302FF8
06AA  6000388207D00000        06DB  6000009E8C303700
06AB  6005809E0DD00000        06DC  6000009E8C700768
06AC  60F5609E0DD00000        06DD  60001889847C36F8
06AD  6000032885D00000        06DE  6000009E8C753758
06AE  6000032885D00000        06DF  6000009E8C30438B
06AF  7F04209E0DD00000        06E0  6000009E8C30434B
06B0  7E7C008D85D00000        06E1  6000009E8C7C3760
06B1  60001C88C5D001F8        06E2  604218CD85D00000
06B2  60001A8247D001F8        06E3  60000E9185D00000
```

```
06E4  604A168D85900070        0715  7E90009E8DD00000
06E5  60016E4005303728        0716  60021960C5D00009
06E6  60016EC005D00000        0717  6005809E0C7E38A9
06E7  6000E08D0DD00000        0718  60008B6007D00000
06E8  6000E08D0E7C36E8        0719  6000AA60067C3B3B
06E9  6000188985D00000        071A  6000446007D00000
06EA  6000009E8C7536F8        071B  6000009E8C743420
06EB  6045809E0D500000        071C  600020844FD0001B
06EC  610218BD85D00000        071D  60000288867C3900
06ED  60FA18848FD00000        071E  6000029185D00000
06EE  60F2168DB4743788        071F  6000008887D00000
06EF  60001888C5D00068        0720  6000188247D0015B
06F0  6105809E0C703798        0721  6000C88D04703820
06F1  60001888C5D0005B        0722  6000108887500000
06F2  6105809E0DD00000        0723  6000009E8C302FF8
06F3  60EA1686B5D00000        0724  6000009E8C303930
06F4  60F576910-4303F68       0725  6000009E8C700768
06F5  6224A09E0DD00000        0726  6000009E8C304348
06F6  622CC09E0DD00000        0727  6000009E8C7C3A98
06F7  6234E09E0DD00000        0728  604A128D85900070
06F8  623D009E0DD00000        0729  604218CD84743A88
06F9  624520-9E0DD00000       072A  600011A184753960
06FA  624D609E0DD00000        072B  6000109185D00000
06FB  61DD609105D00000        072C  6001314005D00000
06FC  61E5629105D00000        072D  6001318005303968
06FD  60020D26C5D00030        072E  600131C005D00000
06FE  61ED6D2805D00000        072F  60000C8985D00000
06FF  61F5609E0DD00000        0730  6001008D0DD00000
0700  61FD609E0DD00000        0731  600118980C743A00
0701  7F04C09E0DD00000        0732  600130840E7539CB
0702  7E7C0CBDB5D00000        0733  60011B9E0DD00000
0703  610A048DB4703900        0734  6000C08D0C7539B0
0704  7EC1809E0C304550        0735  6000009E8C703A00
0705  60006660067438D0        0736  6000009E8C7539F0
0706  60000A88C5D00240        0737  6001308605D00000
0707  7EC0A69E0CCF0000        0738  60000C6086703A00
0708  6000009E8C304598        0739  6001308600C7439E0
0709  6000009E8C7438C0        073A  6000C08D0C7439EB
070A  6000B88447D00048        073B  6000009E8C703A00
070B  6000188207D00000        073C  6000C08D0DD00000
070C  7EC19091050000000       073D  6000009E8C7539B8
070D  6002188D85D00001        073E  6001308207D00000
070E  6000009E8C3E3910        073F  60000C8887D00000
070F  6000F96005303870        0740  6000009E8C7A3A18
0710  60001088C3E3910         0741  6000009E8C304388
0711  6005809E0C7438C1        0742  6000009E8C703930
0712  7E90009E8DD00000        0743  60001108B5D00000
0713  60021160B5D00001        0744  6000009E8C723A30
0714  6005009E0C7838C1        0745  6000108AB7D00000
```

```
0746  6001208D0DD00000          0777  60FA1884BFD00000
0747  6000009E8C723A48          0778  6000009E8C743BD8
0748  6000128A87D00000          0779  60001888C5D0006B
0749  600112840FD00000          077A  61059891047703BE8
074A  6000009E8C783A80          077B  60001888C5D00058
074B  60001088C5D0000B          077C  6105989105D00000
074C  600192960DD00000          077D  60000A9185D00000
074D  6000009E8C753A78          077E  60000C9185D00000
074E  6000108A87D00000          077F  60000E9184303EF0
074F  60A5009E0DD00000          0780  60001091843033FB8
0750  6044C09E0D500000          0781  6000129184303FE0
0751  6000188185D00000          0782  60001D2885D00000
0752  6165808D0D500000          0783  60001D2885D00000
0753  613A008D8DD00000          0784  7F05C09E0DD00000
0754  6142008D8C7C3AE0          0785  7E7C1ABD87D00000
0755  614A008D8C7C3AE0          0786  7E1C1C8D85D00000
0756  6152008D8C7C3AE0          0787  6001B68247D00200
0757  615A008D8C7C3AE0          0788  7EC1609E0DD00000
0758  60EA188D847C3AE0          0789  6002168D85D00001
0759  60F2188685D00000          078A  6001C0844FD00020
075A  60F5988105D00000          078B  6000009E8C743D1B
075B  6165809E0C703420          078C  6001C0844FD00040
075C  61DA008D85D00000          078D  6001C08D0C743CD0
075D  61E2028D847C3B50          078E  6000009E8C743D60
075E  61EA048D847C3B60          078F  6000009E8C703C88
075F  61F2068D847C3B70          0790  6000189184304630
0760  61FA088D847C3B80          0791  7F05609E0DD00000
0761  6000009E8C743B48          0792  7E3C129E85D00000
0762  7F049C8845D000B8          0793  6000188886304030
0763  7E3C008D8DD00000          0794  6000009E8C7E3C98
0764  7E5C008D8C7C3B90          0795  6000186086304000B
0765  60001C60867C3B90          0796  7E1000CD8DD00000
0766  7E7C008D8DD00000          0797  7F05809E0DD00000
0767  60001C60867C3B90          0798  7E6E169F85D00000
0768  60001C6086703B90          0799  6000189184304630
0769  6000009E8C703478          079A  7F05609E0DD00000
076A  7F041C8845D00138          079B  7E5C129E85D00000
076B  6000009E8C703B1B          079C  6000188886304030
076C  7F043C8845D00118          079D  6000009E8C7E3CE0
076D  6000009E8C703B1B          079E  6000186086304008
076E  7F045C8845D000F8          079F  7E0800CD8DD00000
076F  6000009E8C703B1B          07A0  7F05809E0DD00000
0770  7F047C8845D000D8          07A1  7E56169F85D00000
0771  6000009E8C703B1B          07A2  6000189184304630
0772  60F2188D85D00000          07A3  7F05609E0DD00000
0773  60EA188287D00000          07A4  7E7C129E85D00000
0774  6001988447D000A0          07A5  6000188886304030
0775  60F5809E0DD00000          07A6  6000009E8C7E3D28
0776  6102188D85D00000          07A7  60001B6086304008
```

| | | | |
|---|---|---|---|
| 07A8 | 7E0400CD8DD00000 | 07D9 | 6000009E8C700768 |
| 07A9 | 7F05809E0DD00000 | 07DA | 6005188806703EB1 |
| 07AA | 7E3A169F85D00000 | 07DB | 6042188D85D00000 |
| 07AB | 60001891843C4630 | 07DC | 60A2188287D00000 |
| 07AC | 7F05609E0DD00000 | 07DD | 6045809E0C700768 |
| 07AD | 7E1C129E85D00000 | 07DE | 61DA008D85D00000 |
| 07AE | 6000188886304030 | 07DF | 61E2028D85D00000 |
| 07AF | 6000009E8C7E3D70 | 07E0 | 61EA048D85D00000 |
| 07B0 | 6000186086304008 | 07E1 | 61F2068D85D00000 |
| 07B1 | 7E0200CD8DD00000 | 07E2 | 61FA088D85500000 |
| 07B2 | 6001969F05D00000 | 07E3 | 61B2008D85D00000 |
| 07B3 | 6005609E0DD00001 | 07E4 | 61BA028D85D00000 |
| 07B4 | 7E80009E8DD00000 | 07E5 | 61C2048D85D00000 |
| 07B5 | 6001BA6007D00000 | 07E6 | 61CA068D85D00000 |
| 07B6 | 6002168D847C3C81 | 07E7 | 61D2088D85500000 |
| 07B7 | 622CA09E0DD00000 | 07E8 | 613A0A8D85D00000 |
| 07B8 | 6234C09E0DD00000 | 07E9 | 61420C8D85D00000 |
| 07B9 | 623CE09E0DD00000 | 07EA | 614A0E8D85D00000 |
| 07BA | 624500 9E0DD00000 | 07EB | 6152108D85D00000 |
| 07BB | 624D209E0C703420 | 07EC | 615A128D85500000 |
| 07BC | 6000009E8C301F48 | 07ED | 61DA0A8D85D00000 |
| 07BD | 60E20084CFD000F0 | 07EE | 61E20C8D85D00000 |
| 07BE | 6000009E8C7C3E10 | 07EF | 61EA0E8D85D00000 |
| 07BF | 60DA0084CFD000F0 | 07F0 | 61F2108D85D00000 |
| 07C0 | 6000009E8C743ED8 | 07F1 | 61FA128D85500000 |
| 07C1 | 6000009E8C304388 | 07F2 | 613C009E0DD00000 |
| 07C2 | 60EA188D85D00000 | 07F3 | 614420 9E0DD00000 |
| 07C3 | 60F218C285D00000 | 07F4 | 614C409E0DD00000 |
| 07C4 | 600001A98DD00000 | 07F5 | 6154609E0DD00000 |
| 07C5 | 60000129847 50768 | 07F6 | 615C809E0D500000 |
| 07C6 | 7F04009E0DD00000 | 07F7 | 61B4009E0DD00000 |
| 07C7 | 7E7C008DB5D00000 | 07F8 | 61BC209E0DD00000 |
| 07C8 | 6000008247D001F8 | 07F9 | 61C4409E0DD00000 |
| 07C9 | 7EC0008447D001A8 | 07FA | 61CC609E0DD00000 |
| 07CA | 60001088C5D0002B | 07FB | 61D4809E0D500000 |
| 07CB | 7F05009E0DD00000 | 07FC | 61DCA09E0DD00000 |
| 07CC | 6001829845D00018 | 07FD | 61E4C09E0DD00000 |
| 07CD | 6000026086743E98 | 07FE | 61ECE09E0DD00000 |
| 07CE | 6000026086743E90 | 07FF | 61F5009E0DD00000 |
| 07CF | 6000009E8C743EB8 | 0800 | 61FD209E0D500000 |
| 07D0 | 7E6E108D84703E98 | 0801 | 615A136085D00000 |
| 07D1 | 7E56108D84703E98 | 0802 | 6152116085D00004 |
| 07D2 | 7E3A108D85D00000 | 0803 | 614A0F6085D00004 |
| 07D3 | 6002116085D00001 | 0804 | 61420D6085D00004 |
| 07D4 | 60001891847E3ED0 | 0805 | 613A0B6085500004 |
| 07D5 | 6005009E0C700769 | 0806 | 615A13E087D00000 |
| 07D6 | 6001908D05D00000 | 0807 | 615211E085D00004 |
| 07D7 | 7E90006087D00000 | 0808 | 614A0FE085D00004 |
| 07D8 | 6000009E8C7C3E98 | 0809 | 61420DE085D00004 |

0134386

```
080A  613A0BE085500004        083B  7EC1BA88063042CB
080B  6000188207D00000        083C  6000009E8C7041FB
080C  60F4009E0C724070        083D  7EC1BA88063042CB
080D  6000009E8D500000        083E  7E3C169E843042DB
080E  60001C88C5D001B0        083F  6001A0844FD001FB
080F  60001928B5D00000        0840  7E22168D847341EB
0810  60001928B5D00000        0841  6000009E8C3042DB
0811  7F05809E0DD00000        0842  6000009E8C704280
0812  7E7C188D85D00000        0843  600180844FD00020
0813  60019A8645D001B0        0844  6000009E8C7441D0
0814  7E1C188D85D00000        0845  600180844FD00040
0815  61B2008DB5D00000        0846  6000009E8C744188
0816  6001BC840FD00000        0847  600180844FD00060
0817  7EC1DC88067440D8        0848  6000009E8C744140
0818  6002008D85D00001        0849  60001C88C5D001B0
0819  6000009E8C7440B0        084A  7EC1BA8807D00000
081A  60000081B4704218        084B  6002168D85D00001
081B  6001808D0DD00000        084C  7EC1DC8807D00000
081C  7F04009E0C744248        084D  6005609E0DD00001
081D  600180844FD00020        084E  6001A0844FD00200
081E  7E0E008D8472410B        084F  7EC1BA880677425B
081F  6000009E8C7441D0        0850  6000169185D00000
0820  60000081847041D0        0851  7EC1DC8D07D00000
0821  600180844FD00040        0852  6001DA840FD00000
0822  7E06008D8472412B        0853  6000009E8C7242B0
0823  6000009E8C744188        0854  6005608D0DD00001
0824  60000081847041B8        0855  6000009E8C704288
0825  7E0200BD85D00000        0856  6000008D0DD00000
0826  6000009E8C744140        0857  6000009E8D540000
0827  600000B1B5D00000        0858  6164009E0D500000
0828  60001C88C5D001B0        0859  6002188D85D00001
0829  7EC1BA88063042C8        085A  7F05809E0D500000
082A  6000009E8C704168        085B  7EC1DC8807D00000
082B  7EC1BA88063042CB        085C  6005609E0D500001
082C  7E70169E843042DB        085D  7EC1DC6007D00000
082D  6001A0844FD001F8        085E  6005609E0D500001
082E  7E6E168D84734158        085F  61FA008D8DD00000
082F  6000009E8C3042D8        0860  61F2008D8C7C4338
0830  6000009E8C704280        0861  61EA008D8C7C4338
0831  60001C88C5D001B0        0862  61E2008D8C7C4338
0832  7EC1BA88063042CB        0863  61DA008D8C7C4338
0833  6000009E8C7041B0        0864  6000009E8C7C4338
0834  7EC1BA88063042CB        0865  60001888C5D0005B
0835  7E58169E843042DB        0866  6105809E0D500000
0836  6001A0844FD001F8        0867  61021896C5D00030
0837  7E46168D847341A0        0868  6105809E0D500000
0838  6000009E8C3042D8        0869  60E20084CFD000F0
0839  6000009E8C704280        086A  60001B81847C4370
083A  60001C88C5D001B0        086B  60DA0084CFD000F0
```

```
086C  60001891847C4388      089D  7F05809E0D540000
086D  60A5808D0D500000      089E  7E2216B287D00000
086E  60DA0084CFD000F0      089F  6000009E8C784538
086F  60001888855C0000      08A0  6000108887D00000
0870  6000009E8C704438      08A1  7E2216B287D00000
0871  60001888C5D00090      08A2  6000009E8C784538
0872  60E5809E0DD00000      08A3  6000108887D00000
0873  60001888C5D00028      08A4  7E2216B287D00000
0874  6005809E0DD00000      08A5  6000009E8C784538
0875  60001888C5D00068      08A6  6000108887D00000
0876  6042168D85D00000      08A7  7E2216C685900078
0877  6000009E8C7543D0      08A8  6000132085304540
0878  60001888C5D00058      08A9  6000009E8D500000
0879  6000009E8C7043D8      08AA  6002188D85D00001
087A  6000168A87D00000      08AB  7F0582C80DD00000
087B  6105809E0C3044C0      08AC  7E1E00C38C744580
087C  61FD209E0DD00000      08AD  7E1E00C38C744588
087D  61F5009E0DD00000      08AE  6000009E8C744590
087E  61ECE09E0DD00000      08AF  7E3C068D85500000
087F  61E4E09E0DD00000      08B0  7E1C068D85500000
0880  61DCE09E0DD00000      08B1  7E7C068D85500000
0881  61D4E09E0DD00000      08B2  7E5C068D85500000
0882  61CCE09E0DD00000      08B3  60020E8D85D00001
0883  61C4E09E0DD00000      08B4  7E8020844FD00000
0884  61BCE09E0DD00000      08B5 .6000E08D0D540000
0885  61B4E09E0DD00000      08B6  7E1E02C28DD00000
0886  6000188885500000      08B7  7E1E00838C7445E8
0887  60001888C5D00090      08B8  7F04E09E0C744610
0888  60DD809E0DD00000      08B9  7E6E0E8D85D00000
0889  60001888C5D00028      08BA  6002188D85D00001
088A  610D809E0DD00000      08BB  7F05809E0DD00000
088B  60001888C5D00068      08BC  7E700E9E85500000
088C  604A168D85D00000      08BD  7F04E09E0DD00000
088D  6000009E8C7544B0      08BE  7E220E8D85D00000
088E  60001888C5D00058      08BF  6002188D85D00001
088F  6000009E8C7044B8      08C0  7F05809E0DD00000
0890  6000168A87D00000      08C1  7E3C0E9E85500000
0891  60FD809E0C3044C0      08C2  7E460E8D85D00000
0892  615D209E0DD00000      08C3  6002188D85D00001
0893  6155009E0DD00000      08C4  7F05809E0DD00000
0894  614CE09E0DD00000      08C5  7E580E9E85500000
0895  6144E09E0DD00000      08C6  7F05209E0DD00000
0896  613CE09E0DD00000      08C7  7E22128D85D00000
0897  6000188885500000      08C8  7E3C00CD8DD00000
0898  60000E9185D00000      08C9  7F05009E0DD00000
0899  6000109185D00000      08CA  7E22109F85D00000
089A  6000129185D00000      08CB  7E3C00CD8DD00000
089B  60001888C5D01388      08CC  7F04E09E0DD00000
089C  6001608D0DD00000      08CD  7E220E9F85D00000
```

```
08CE  7E3C00CD8DD00000        08FF  7E901CC605D00000
08CF  7F04C09E0DD00000        0900  7F05809E0DD00000
08D0  7E220C9F85D00000        0901  7E3C008D8DD00000
08D1  7E3C00CD8DD00000        0902  7E5C008D8C7C4838
08D2  7F04A09E0DD00000        0903  7E1E1CC2847C4838
08D3  7E220A9F85500000        0904  7E7C008D8DD00000
08D4  600A008D8DD00000        0905  7E1E1CC2847C4838
08D5  60E20084CF5C00F0        0906  7E1E1CC285D00000
08D6  6000009E8C7C46D0        0907  6000E48705D00000
08D7  60DA0084CFD000F0        0908  6000009184724850
08D8  600018B185540000        0909  6000009E8D500000
08D9  600D809E0C7043AB        090A  600040844FD00030
08DA  60DA0084CFD000F0        090B  600000818C774878
08DB  6000009E8C7446E8        090C  6000008D0D540000
08DC  6000009E8D500000        090D  6000182185D00000
08DD  600018B185D00000        090E  6001808645500010
08DE  600D809E0DD00000        090F  60001C6087D00000
08DF  600018B8C5D001B0        0910  6001C29845D00018
08E0  7EC1809E0DD00000        0911  600040844FD00010
08E1  60001C88C5D00140        0912  600004608E7449D8
08E2  60F20E8D843047D0        0913  6000009E8C744A30
08E3  6000012D0C754748        0914  600040844FD00018
08E4  61020084CFD0005B        0915  6000009E8C744980
08E5  6000009E8C7C4738        0916  600040844FD00020
08E6  6044009E0D500000        0917  6000009E8C744928
08E7  6000008A87D00000        0918  6000009E8C304550
08E8  6044009E0D500000        0919  6000066086744918
08E9  600018C184744768        091A  6000069E8CCF0000
08EA  616580BE0DD00000        091B  60000A88C5D01388
08EB  6000188987D00000        091C  7F04A09E0DD00000
08EC  6045809E0D500000        091D  7E220A8D85D00000
08ED  61020084CFD00068        091E  600000818C754860
08EE  6044009E0D540000        091F  6000A086053048F0
08EF  600018C184704750        0920  600000818C754860
08F0  60DA0084CFD000F0        0921  60001C6087D00000
08F1  6000009E8C7C4798        0922  6000008D0D550000
08F2  604A008D85500000        0923  6000026087D00000
08F3  600018B8C5D00138        0924  6000009E8C354A50
08F4  7EC1809E0DD00000        0925  6000009E8C304550
08F5  60001C88C5D000A0        0926  6000066086744970
08F6  60EA0E8D843047D0        0927  6000069E8CCF0000
08F7  60FA0084CFD0005B        0928  60000A88C5D01F40
08F8  6000009E0D540000        0929  600000818C754860
08F9  6000008A07500000        092A  6000A086053049 48
08FA  60000088C5D00020        092B  600000818C754860
08FB  6002188D85D00001        092C  60001C6087D00000
08FC  7E801CC2067C47F8        092D  6000008D0D550000
08FD  6000009E8C7C47D8        092E  6000026087D00000
08FE  6000009185500000        092F  6000009E8C354A50
```

```
0930  6000009E8C304550
0931  60000660B67449CB
0932  6000069E8CCF0000
0933  60000A88C5D00320
0934  600000818C754860
0935  6000A086053049A0
0936  600000818C754860
0937  60001C6087D00000
0938  6000008D0D550000
0939  60000260B7D00000
093A  6000009E8C354A50
093B  6000009E8C304550
093C  60000660B6744A20
093D  6000069E8CCF0000
093E  60000A88C5D00050
093F  600000818C754860
0940  6000A086053049F8
0941  600000818C754860
0942  60001C6087D00000
0943  6000008D0D550000
0944  60000260B7D00000
0945  6000009E8C354A50
0946  6000009E8C304550
0947  6000608605D00000
0948  6000012D0C754860
0949  6000008D0D500000
094A  7E800288C5500018
094B  6001382D05D00000
094C  6001982D05D00000
094D  6001988645D04A80
094E  60001B9E8CCF0000
094F  6000009E8CFF0000
0950  6000009E8C700848
0951  6000009E8C704B10
0952  6000009E8C700848
0953  6000009E8C700848
0954  6000009E8C700848
0955  6000009E8C700848
0956  6000009E8C700848
0957  6000009E8C704B20
0958  6000009E8C700848
0959  6000009E8C704B2B
095A  6000009E8C704B6B
095B  6000009E8C704B80
095C  6000009E8C700848
095D  6000009E8C700848
095E  6000009E8C700848
095F  6000009E8C700848
0960  6000009E8C700848
0961  6000009E8C700848
0962  6000009E8C304388
0963  6000009E8C700768
0964  6000009E8C700848
0965  6000009E8C304B38
0966  6000009E8C700768
0967  60E20084CFD000F0
0968  6042188F867C42F8
0969  6000009E8C7A4B60
096A  6000009E8C304388
096B  6000009E8C7042F8
096C  6045809E0D500000
096D  60001888C5D0000B
096E  6075809E0DD00000
096F  6000009E8C700768
0970  6072188D85D00000
0971  7F05809E0DD00000
0972  7E58188D85D00000
0973  6025809E0DD00000
0974  6000189185D00000
0975  6075809E0DD00000
0976  6000009E8C700768
0977  6000009E8C304C00
0978  6000009E8C7731B0
0979  6000009E8C7031A0
097A  6000009E8C304C00
097B  6000009E8C7231B0
097C  6000009E8C7031A0
097D  6000009E8C304C00
097E  6000009E8C7431B0
097F  6000009E8C7031A0
0980  6000009E8C301F48
0981  640A12C28E3055C0
0982  610D968D05D00000
0983  60AA008D85D00000
0984  60000C8985D00000
0985  6002028D85D00000
0986  60CA048D85D00000
0987  60DA0A8D847D4C38
0988  600020844FD00B00
0989  64DA108D84724E20
098A  6000C09E0C34509B
098B  640A0C86ADD00000
098C  E412008D8DD00006
098D  6000009185D00000
098E  7EC00C8007D00000
098F  7E180E8D847D4C78
0990  6000009E8C395088
0991  600040924DD00060
```

```
0992  6000009E8C744CE8        09C3  600000918D500000
0993  6000A0924DD00060        09C4  640A0C86ADD00000
0994  6000009E8C744CD8        09C5  6412008D8C39507E
0995  600040924DD00090        09C6  640A0086ADD00000
0996  6000009E8C7C4CC0        09C7  6412008D8C39506E
0997  60000260B6704CE8        09C8  600040924DD00060
0998  6000A0924DD00090        09C9  6000009E8C744EA0
0999  6000009E8C7C4CD8        09CA  6000A0924DD00060
099A  60001660B7D00000        09CB  6000009E8C744E90
099B  600040844FD00010        09CC  600040924DD00090
099C  6000009E8C744DB0        09CD  6000009E8C7C4E78
099D  6000A0844FD00010        09CE  60000260B6704EA0
099E  6000009E8C744DE8        09CF  6000A0924DD00090
099F  6001628207D00000        09D0  6000009E8C7C4E90
09A0  6000009E8C724D10        09D1  60001660B7D00000
09A1  6000368605D00000        09D2  600040844FD00010
09A2  6000009E8C7D4D10        09D3  6000009E8C744F68
09A3  640A0C86AC304FD8        09D4  6000A0844FD00010
09A4  68020A848FD00001        09D5  6000009E0C744FA0
09A5  68020A848F5C0001        09D6  6001628207D00000
09A6  7E80166087D00000        09D7  6000009E0C724EC8
09A7  6000208D0C724D10        09D8  6000368605D00000
09A8  6000208D0D540000        09D9  640A0C86AC305038
09A9  6000009E8C754D78        09DA  640A0086AC305008
09AA  68020084CFD00101        09DB  60004A840FD00000
09AB  68020084CF5C0101        09DC  60004A840F5C0000
09AC  7E80026087D00000        09DD  60001660B7D00000
09AD  6000009E8C724D50        09DE  6000208D0C724EC8
09AE  600000918D500000        09DF  6000208D0D540000
09AF  6000009E8C7D4D78        09E0  6000009E8C754F38
09B0  640A0C86AC304FD8        09E1  640A0086AC305008
09B1  6000A0824FD00100        09E2  600040844FD00100
09B2  6000A0824F5C0100        09E3  600040844F5C0100
09B3  6000028B87D00000        09E4  6000026087D00000
09B4  6000009E8C754D78        09E5  6000009E8C724F08
09B5  600000918D500000        09E6  600000918D500000
09B6  6000009E8C7D4DB0        09E7  640A0C86AC305038
09B7  640A0C86AC304FD8        09E8  6000A0824FD00100
09B8  68020A848FD00001        09E9  6000A0824F5C0100
09B9  68020A848F5C0001        09EA  6000028B87D00000
09BA  60001660B7D00000        09EB  6000009E8C754F38
09BB  6000009E8C724DB0        09EC  600000918D500000
09BC  600000918D500000        09ED  640A0086AC305008
09BD  6000009E8C7D4DE8        09EE  640A0C86AC305038
09BE  640A0C86AC304FD8        09EF  60004A840FD00000
09BF  68020A848FD00001        09F0  60004A840F5C0000
09C0  68020A848F5C0001        09F1  60001660B7D00000
09C1  7E80026087D00000        09F2  6000009E8C724F70
09C2  68020A848E724E01        09F3  600000918D500000
```

| | |
|---|---|
| 09F4 | 640A0C86AC30503B |
| 09F5 | 640A0086AC305008 |
| 09F6 | 60004A840FD00000 |
| 09F7 | 60004A840F5C0000 |
| 09F8 | 60000260B7D00000 |
| 09F9 | 6000009E8C724FAB |
| 09FA | 600000918D500000 |
| 09FB | 6412008D8C794FFE |
| 09FC | E0000C8887D00000 |
| 09FD | 7E580A8D85D00000 |
| 09FE | 7E180E8D85500000 |
| 09FF | 60000C8887D00000 |
| 0A00 | 6000EA8D01510000 |
| 0A01 | 6412008D8C79502E |
| 0A02 | E000008807D00000 |
| 0A03 | 7E58048D847D5018 |
| 0A04 | 7E18068D85500000 |
| 0A05 | 6000008807D00000 |
| 0A06 | 600064BD05500000 |
| 0A07 | 6412008D8C79505E |
| 0A08 | E000CC8807D00000 |
| 0A09 | 7E580A8D847D5048 |
| 0A0A | 7E180E8D85500000 |
| 0A0B | 6000CC8807D00000 |
| 0A0C | 6000EA8D05500000 |
| 0A0D | E000009E0DD00000 |
| 0A0E | 7E18068D81510000 |
| 0A0F | E000C09E0DD00000 |
| 0A10 | 7E180E8D81510000 |
| 0A11 | 640A0CB6ADD00000 |
| 0A12 | E412008D8D500006 |
| 0A13 | 64E4009E0DD00000 |
| 0A14 | 64EC209E0C705638 |
| 0A15 | 6000009E8C301F48 |
| 0A16 | 640A12C28FD00000 |
| 0A17 | 610A028D85D00000 |
| 0A18 | 60DA048D847D50C0 |
| 0A19 | 600040924DD00090 |
| 0A1A | 6000008984 7C50E0 |
| 0A1B | 60000260B7D00000 |
| 0A1C | 640A0086ADD00000 |
| 0A1D | 6412008D8C39506E |
| 0A1E | 640A0086AC305008 |
| 0A1F | 600040844FD002D0 |
| 0A20 | 6000009E8C7631A0 |
| 0A21 | 600040824FD00208 |
| 0A22 | 6000009E8C735130 |
| 0A23 | 600040844FD00100 |
| 0A24 | 6000009E8C745130 |
| 0A25 | 6000009E8C7031A0 |
| 0A26 | 60000260B7D00000 |
| 0A27 | 6000009E8C7250F0 |
| 0A28 | 6000009E8C7031B0 |
| 0A29 | 6000009E8C301F48 |
| 0A2A | 640A12C28FD00000 |
| 0A2B | 610A028D85D00000 |
| 0A2C | 60DA048D847D5160 |
| 0A2D | 600040924DD00090 |
| 0A2E | 6000008984 7C5180 |
| 0A2F | 60000260B7D00000 |
| 0A30 | 640A0086ADD00000 |
| 0A31 | 6412008D8C39506E |
| 0A32 | 640A0086AC305008 |
| 0A33 | 600040824FD00180 |
| 0A34 | 6000009E8C7631A0 |
| 0A35 | 600040844FD001C8 |
| 0A36 | 60000260867631A0 |
| 0A37 | 6000009E8C725190 |
| 0A38 | 640A0086AC305008 |
| 0A39 | 60DA0092CDD00090 |
| 0A3A | 6000009E8C7C31B0 |
| 0A3B | 600040844FD00158 |
| 0A3C | 6000009E8C7431B0 |
| 0A3D | 600040844FD00168 |
| 0A3E | 6000009E8C7431B0 |
| 0A3F | 6000009E8C7031A0 |
| 0A40 | 6000009E8C301F48 |
| 0A41 | 6000009E8C3055C0 |
| 0A42 | 610D9C8D05D00000 |
| 0A43 | 60AA0C8D85D00000 |
| 0A44 | 60001891847D5220 |
| 0A45 | 640A0CB6ADD00000 |
| 0A46 | E412008D8DD00006 |
| 0A47 | 60000C8087D00000 |
| 0A48 | 7E58168D847D5240 |
| 0A49 | 640A0CB6ADD00000 |
| 0A4A | E412008D8DD00006 |
| 0A4B | 7E18048D85D00000 |
| 0A4C | 60DA0084CFD00090 |
| 0A4D | 6000009E8C7C5278 |
| 0A4E | 60001C6087D00000 |
| 0A4F | 7E58068D847D5278 |
| 0A50 | 6001208D2DD00000 |
| 0A51 | E000008D0DD00002 |
| 0A52 | 7E180C8D85D00000 |
| 0A53 | 600160924DD00008 |
| 0A54 | 6000009E8C745398 |
| 0A55 | 600008818479542B |

```
OA56  7E58088D847D52B0        OA87  7E180A8D847D5438
OA57  7E180ABDB5D00000        OA88  60001C60867052D8
OA58  6000128087D00000        OA89  600000818D550000
OA59  6000008D05D00004        OA8A  600160924DD00010
OA5A  60001C6085D00000        OA8B  60010C840E7C5468
OA5B  6001C08D0C7252FB        OA8C  6000009E8C7454A0
OA5C  60001C888E745308        OA8D  600160924DD00040
OA5D  6000009E8C745340        OA8E  600104840E7C5480
OA5E  6045809E0C705358        OA8F  6000009E8C7054A8
OA5F  6001208D2DD00000        OA90  6000009E8C7454A8
OA60  E000008D0DD00002        OA91  600160924DD00100
OA61  600000D18DD00000        OA92  6000009E8C7454A0
OA62  6000908D04305448        OA93  6000108181510000
OA63  6045809E0C745358        OA94  6000109181510000
OA64  600000C18DD00000        OA95  7E001A8D847D54A8
OA65  6000B08D04305448        OA96  600160924DD00400
OA66  6045809E0C745358        OA97  6000009E8C7C54F0
OA67  7E58088D847052B8        OA98  6000188887D00000
OA68  600000D18DD00000        OA99  6000009E8C7D54C8
OA69  6000908D04305448        OA9A  7F05A09E0DD00000
OA6A  6045809E0C705358        OA9B  600160924DD00080
OA6B  60001891B5D00000        OA9C  6000009E8C7454A0
OA6C  60F5809E0DD00000        OA9D  6000108181510000
OA6D  600D908845D00058        OA9E  60001260ADD00000
OA6E  6165988845D000F0        OA9F  600000844DD00006
OA6F  6105009E0DD00000        OAA0  7F0460890DD00000
OA70  60E5809E0C700768        OAA1  7E46088D847C5518
OA71  600008818479540B        OAA2  BF04809E0C7054C8
OA72  7E58088D847D5390        OAA3  DF04609E0C7054C8
OA73  7E180A8D85D00000        OAA4  6000009E8C301F48
OA74  6000128087D00000        OAA5  640A12C28FD00000
OA75  6000008D05D00004        OAA6  6000188985D00000
OA76  60001C6085D00000        OAA7  64DA008D8DD00000
OA77  6001C08D0C7253D0        OAA8  60DA108D85D00000
OA78  6000009E8C7453E0        OAA9  6000009E8C705578
OA79  6045809E0C705358        OAAA  60CD009E0DD00000
OA7A  6001208D2DD00000        OAAB  610A108D85D00000
OA7B  E000008D0DD00002        OAAC  6005009E0DD00000
OA7C  60008C840FD00000        OAAD  60AA18828FD00000
OA7D  6000AC840E745320        OAAE  6000009E8C740768
OA7E  6000009E8C745400        OAAF  60AD809E0DD00000
OA7F  7E58088D80715398        OAB0  60DA188D85D00000
OA80  7E58088D807152B8        OAB1  60CD809E0C3055C0
OA81  6000128887D00000        OAB2  610D809E0DD00000
OA82  6000008D05D00004        OAB3  60DA0082CFD000D0
OA83  7E180A8D847D5418        OAB4  6000009E8C7C55B8
OA84  60001C60867053B8        OAB5  6001988D07D00000
OA85  6000128887D00000        OAB6  6001982D05D00000
OA86  6000008D05D00004        OAB7  60059A81047055F0
```

```
OABB  609A188D85D00000        OAE9  6805809E0C7D5749
OAB9  6000009E8C7455E8        OAEA  60001C608DD00000
OABA  640A1886ADD00000        OAEB  6000009E8C7457D8
OABB  E412008D8DD00006        OAEC  60001280A7D00000
OABC  7E00188D81510000        OAED  E0000088847057DE
OABD  610A188D85500000        OAEE  7E18188D847D5770
OABE  600180844FD00800        OAEF  60001C608FD00000
OABF  6000009E8C765608        OAF0  60001C60867457C0
OACO  64DDA09E0C705618        OAF1  6805809E0C3057C9
OAC1  60001A9185D00000        OAF2  60001C608C7D5790
OAC2  64DDA09E0C700768        OAF3  60001280A67457B0
OAC3  60019C8D05D00000        OAF4  E0000088843057DE
OAC4  60001888C5D00800        OAF5  6805A09E0D500001
OAC5  7EC1809E0C305678        OAF6  6000009E8C3057D8
OAC6  6000009E8C700768        OAF7  6805A09E0D500D01
OAC7  64E2128D85D00000        OAF8  6805809E0D500001
OAC8  640A128685D00000        OAF9  60001280A7D00000
OAC9  6412008D85D00004        OAFA  E0000088885500006
OACA  64EA1C8D85D00000        OAFB  7E58188D85D00000
OACB  60001888C5D00800        OAFC  7E181A8D85D00000
OACC  7EC1809E0C305678        OAFD  7E801C6085D00000
OACD  6000188185D00000        OAFE  68059C88087157F9
OACE  64DD98880D500000        OAFF  7E801280A7540000
OACF  6001C08D0DD00000        OB00  E805A088047057DF
OADO  6000009E8D540000        OB01  64DA008D8DD00000
OAD1  600012B8ADD00000        OB02  6000009E8C740848
OAD2  E00000888DD00002        OB03  6000009E8C301F48
OAD3  6001C0984DD00008        OB04  609A008D8C305830
OAD4  6000009E8C7456B8        OB05  6000009E8C700760
OAD5  6000009E8C795770        OB06  60012C8D04745868
OAD6  6000009E8C705710        OB07  6000009E8C3055C0
OAD7  6000009E8C795738        OB08  610D8E9105D00000
OAD8  6000009E8C7D56C8        OB09  609CE08D0C705868
OAD9  7E581A8D847D56C8        OB0A  6000009E8C301F48
OADA  60001C608DD00000        OB0B  60012C8D04305868
OADB  6000009E8C7456F8        OB0C  6000009E8C700760
OADC  60001280A7D00000        OB0D  60CA0092CDD000B0
OADD  FE900088843057DE        OB0E  64DA008D8C745880
OADE  6805A09E0D500001        OB0F  6000009E8C740848
OADF  7E18188D85D00000        OB10  60021C8D85D00000
OAE0  6805A09E0DD00001        OB11  610A168D85D00000
OAE1  7E80009E8C7057C0        OB12  60DA0084CFD000D0
OAE2  7E58188D847D5710        OB13  60F2028D847C58A8
OAE3  60001C608FD00000        OB14  6001762D05D00000
OAE4  60001CB8867457C0        OB15  60CA0092CDD00080
OAE5  60001280A7D00000        OB16  6000026086345DA0
OAE6  FE900088847057DE        OB17  60CA0084CFD00010
OAE7  7E18188D847D5738        OB18  64F40A9104745BE0
OAE8  6000009E8C3057C8        OB19  60DA0084CFD00060
```

0134386

```
OB1A  60DA068D84745D58        OB4B  7E46109E85D00000
OB1B  60CA0092CDD00080        OB4C  6000166087D00000
OB1C  6000009E8C7C58F0        OB4D  6001028D04772F28
OB1D  60821C8DB5D00000        OB4E  6001028D04302930
OB1E  60DA0084CFD00028        OB4F  60000A9185D00000
OB1F  6000009E8C745910        OB50  7E18108D85D00000
OB20  60DA0084CFD00058        OB51  6000166085D00000
OB21  609A1A8D847C5E68        OB52  7E46109E84775AA8
OB22  6001D68207D00000        OB53  6001028D04302930
OB23  60016E8D04725EC0        OB54  6000009E8C705A88
OB24  7EC0E08D0C745E98        OB55  6000168887D00000
OB25  60016E8207D00000        OB56  6001028D04742F20
OB26  60017C8605D00000        OB57  6000009E8D500000
OB27  6000168A87D00000        OB58  6000009E8C302F70
OB28  7EC1769104705E98        OB59  6000009E8C795B90
OB29  6000009E8C795AC0        OB5A  60001088C5D00100
OB2A  6000009E8C302F70        OB5B  6001DC2447D00008
OB2B  6000009E8C7959D0        OB5C  6001DC8D0CCF0000
OB2C  6001DC2447D00008        OB5D  6802028D84745B30
OB2D  60001C9E8CCF0000        OB5E  6000009E8D305AF8
OB2E  6802028D85D00001        OB5F  6802028D85D00001
OB2F  7F04208D0DD00000        OB60  7F04208D0DD00000
OB30  7E801088C5D00100        OB61  7E801088C5D00100
OB31  6802028D85D00001        OB62  6802028D85D00001
OB32  7E46029E84302930        OB63  7E46029E84302930
OB33  7E80009E8D305970        OB64  7E80009E8D305AF8
OB34  7F0516880DD00000        OB65  6802028D85D00001
OB35  6000CA9105D00000        OB66  7F04208D0DD00000
OB36  6001766005D00000        OB67  7E46109E85D00000
OB37  7E46109E84775AA8        OB68  6001766007D00000
OB38  6001028D04302930        OB69  6001028D04772F20
OB39  6000C09E0C7059B0        OB6A  6001028D04302930
OB3A  6001DC2447D00008        OB6B  60000A9185D00000
OB3B  60001C9E8CCF0000        OB6C  6000029185D00000
OB3C  6802028D847D59E1        OB6D  6000166085D00000
OB3D  6000009E8C302F40        OB6E  7E46108D84775AA8
OB3E  7E81C08D0D3059F8        OB6F  7E18109E85D00000
OB3F  6000009E8C7C5A10        OB70  6001028D04302930
OB40  60001088C5D00100        OB71  6000009E8C705B68
OB41  6802028D80715A51        OB72  6001DC2447D00008
OB42  6000009E8C7D5A10        OB73  6802028D847D5B99
OB43  6802028D85D00001        OB74  6000009E8C302F40
OB44  7F04208D0DD00000        OB75  60001088C5D00100
OB45  7E801088C5D00100        OB76  6001DC8D0CCF0000
OB46  6802028D85D00001        OB77  6000009E8C745BD0
OB47  7E46029E84302930        OB78  7E80009E8D305BC8
OB48  7E80009E8D305A18        OB79  6000009E88715970
OB49  6802028D85D00001        OB7A  6000CA91047D5BD0
OB4A  7F04208D0DD00000        OB7B  7F05008D0C7059B0
```

| | |
|---|---|
| OB7C 609A008D8DD00000 | OBAD 7F0A028D85D00000 |
| OB7D 60000491847C5F80 | OBAE 640A028287D00000 |
| OB7E 680202BD85D00000 | OBAF 6000228645D003C0 |
| OB7F 7F0436882DD00000 | OBB0 60AA028487D00000 |
| OB80 7E46029E85D00000 | OBB1 609A1A8D84725E68 |
| OB81 6001762447D00008 | OBB2 6000069185DQ0000 |
| OB82 6000169E8CCF0000 | OBB3 609A1A8D84705E68 |
| OB83 6000228D04795C98 | OBB4 60000E88C5570200 |
| OB84 60000A9184302F70 | OBB5 7EC0E69105900020 |
| OB85 6000009E8C795C48 | OBB6 6004608D0DD00001 |
| OB86 6000009E8C302930 | OBB7 7EB0009E8D305DB0 |
| OB87 6000009E8D305C30 | OBB8 6000009E8D500000 |
| OB88 6000009E8D500000 | OBB9 60DA0084CFD00058 |
| OB89 6000009EBD305C50 | OBBA 6001D68D04745DEB |
| OB8A 6000228D047D5C50 | OBBB 60F21C8D85D00000 |
| OB8B 6000009E8C302F40 | OBBC 60B21C8487D00000 |
| OB8C 6001608D0DD00000 | OBBD 64F2008D84302830 |
| OB8D 6000009E8C745C80 | OBBE 6000768D05D00000 |
| OB8E 6000009E8C302930 | OBBF 6482108D85D00000 |
| OB8F 6000009E8D305C70 | OBC0 60000A91847D5E00 |
| OB90 6000009E8C302F28 | OBC1 6001C08D2DD00000 |
| OB91 6000009E8C305D30 | OBC2 7F05008D0C795E30 |
| OB92 6000009E8D500000 | OBC3 6001208D2DD00000 |
| OB93 60000A9184302F70 | OBC4 6000009E8C795E40 |
| OB94 6000009E8C795D00 | OBC5 6000009E8C7059B0 |
| OB95 6000009E8D305CB0 | OBC6 6001208D2DD00000 |
| OB96 6001608D0DD00000 | OBC7 7E46109E847959B0 |
| OB97 6000009E8C7C5CD8 | OBC8 6000166087D00000 |
| OB98 6000009E8C302F28 | OBC9 6000009E8D570000 |
| OB99 6000009E8C305D30 | OBCA 6000009E8C302F70 |
| OB9A 6000009E8D500000 | OBCB 6001028D04302F40 |
| OB9B 6000009E8C302930 | OBCC 6000009E8B7159B0 |
| OB9C 6000009E8D305CD8 | OBCD 60000491847C5F80 |
| OB9D 6000009E8C302F28 | OBCE 6001D68207D00000 |
| OB9E 6000009E8C305D30 | OBCF 7EC0408D0C775E88 |
| OB9F 6000009E8D500000 | OBD0 6000009E8C705E98 |
| OBA0 6000009E8D305D08 | OBD1 60017C8605D00000 |
| OBA1 6000009E8C7D5D08 | OBD2 6000169185D00000 |
| OBA2 6000009E8C302F40 | OBD3 6000609244DD00060 |
| OBA3 6001608D0DD00000 | OBD4 6492008D8C745EB0 |
| OBA4 6000009E8D540000 | OBD5 60CA0092CDD00080 |
| OBA5 6000009E8C705C30 | OBD6 6001668D04745DC8 |
| OBA6 6000C0924DD00008 | OBD7 6001C08D2C705948 |
| OBA7 6000009E8D540000 | OBD8 6482028D85D00000 |
| OBA8 6000CC6007D00000 | OBD9 60000E91847D5EC8 |
| OBA9 6000009E8D5E0000 | OBDA 6000009E8C305BF8 |
| OBAA 6000006087500000 | OBDB 6000009E8C795EF0 |
| OBAB 60CA0084CFD000A0 | OBDC 6000CC8007D00000 |
| OBAC 609A1A8D847C5E68 | OBDD 6000008D05D00004 |

```
OBDE  7EC0F68D047D5EF0        OC0F  6000009E8C306598
OBDF  6001C08D2C705948        OC10  64F5208D0DD00000
OBE0  60AA028D85D00000        OC11  6042108D84706010
OBE1  64E4228845D00800        OC12  6000009E8C306228
OBE2  64EC208D0C305638        OC13  6000009E8C306218
OBE3  60AA0286C5D00800        OC14  6000009E8C7060B0
OBE4  60AC208D0DD00000        OC15  E3E2008D8DD00006
OBE5  60020284C7D00800        OC16  7E00028D847D60B0
OBE6  60043C8845D00800        OC17  602C229105D00000
OBE7  6000009E8C305888        OC18  6034209E0C700768
OBE8  60020284C7D00800        OC19  63E2008D8DD00006
OBE9  6004228645D00800        OC1A  6032008D8DD00000
OBEA  64EC208D0D540000        OC1B  602A028D84746118
OBEB  60AA048D85570000        OC1C  E000009E8DD00000
OBEC  64E4428605D00000        OC1D  7E00008D847D60E8
OBED  60AC208D0C305638        OC1E  629A02828E7C0848
OBEE  64EA1C8D84305888        OC1F  62A212828E786118
OBEF  6000009E8C705F40        OC20  6092188D867E6118
OBF0  64F4008D0C3067F8        OC21  60959860067C6118
OBF1  609D808D0DD00000        OC22  6095809E0C700848
OBF2  60000460863066 68       OC23  9F04209E0C700760
OBF3  649210848FD00000        OC24  6000009E8C306228
OBF4  645210848E745FC8        OC25  6000009E8C306218
OBF5  64AA10848E745FC8        OC26  602A04CD85D00000
OBF6  648A10848E745FC8        OC27  6000009185900078
OBF7  6000009E8C7C605B        OC28  60C20C8D85D00000
OBF8  6000009E8C70084B        OC29  7E00028D847D6148
OBF9  60CA0084CFD00010        OC2A  6000200005306150
OBFA  6045008D0C746040        OC2B  6000008D0DD00000
OBFB  60001C608FD00000        OC2C  60C20287847C6A58
OBFC  6045008D0C776028        OC2D  60C4209E0C7A0768
OBFD  60CA0092CDD000B0        OC2E  60C4C09E0C706A58
OBFE  7EC1008D0C746068        OC2F  6000009E8C306228
OBFF  6045008D0DD00000        OC30  6000009E8C306218
OC00  6802108D85D00001        OC31  60C20C8D85D00000
OC01  6000108886306598        OC32  60C2188D85D00000
OC02  6000166087D00000        OC33  60001A9185D00000
OC03  6042108D84725F90        OC34  60C5A09E0C7D61A0
OC04  6000009E8D500000        OC35  7E00188685D00000
OC05  648210 8D84306598       OC36  60BD808D0C7A0768
OC06  64F5208D0DD00000        OC37  60C4C09E0C706A58
OC07  6042108D84706010        OC38  6015209E0C700768
OC08  6802108D84306598        OC39  6000009E8C301F48
OC09  64F5208D0DD00000        OC3A  6000029185D00000
OC0A  6042108D84706010        OC3B  60000A9184300C20
OC0B  6000009E8C306598        OC3C  6000009E8C304780
OC0C  6000009E8C706010        OC3D  60FA0082CFD00068
OC0D  6045008D0C306810        OC3E  6000009E8C7C6200
OC0E  6000108645D00180        OC3F  6000009185D00000
```

0134386

| | |
|---|---|
| OC40 | 602C009E0DD00000 |
| OC41 | 6000009105D00000 |
| OC42 | 6034009E0C700768 |
| OC43 | 640A1286ADD00000 |
| OC44 | E412008D8D500006 |
| OC45 | 62B212828FD00000 |
| OC46 | 626A128685580000 |
| OC47 | 626A128287D00000 |
| OC48 | 62F2128685500000 |
| OC49 | 601D809E0C700760 |
| OC4A | 6000009E8C302520 |
| OC4B | 6000009E8C746278 |
| OC4C | 601A132D85D00000 |
| OC4D | 6000189184740760 |
| OC4E | 601D808D0C700978 |
| OC4F | 64F4008D0C30628B |
| OC50 | 6000009E8C700760 |
| OC51 | 60000491847D6288 |
| OC52 | 638A008DA5D00000 |
| OC53 | E392028D843067FA |
| OC54 | 6001CE2447D0000B |
| OC55 | 609D8E2805D00000 |
| OC56 | 6000F92247D00020 |
| OC57 | 6001988645D067A0 |
| OC58 | 7E58108D847D62C0 |
| OC59 | 64BD008027D00000 |
| OC5A | E00020BD0DD00006 |
| OC5B | 7E18108D85D00000 |
| OC5C | 64C5068845D00100 |
| OC5D | 6000EE8247D001FB |
| OC5E | 7E58108D847D62F0 |
| OC5F | 64CD046006306668 |
| OC60 | 645A10848FD00000 |
| OC61 | 60010880047C6318 |
| OC62 | 6000868D05D00000 |
| OC63 | 60DA0084CFD00008 |
| OC64 | 7EC0F88D0CD40000 |
| OC65 | 6000046086306668 |
| OC66 | 600108840FD00000 |
| OC67 | 646A10848E74642B |
| OC68 | 646210848E7C6368 |
| OC69 | 61020084CFD00058 |
| OC6A | 6045008D0C7C6390 |
| OC6B | 6000009E8C306598 |
| OC6C | 64F52291047063A0 |
| OC6D | 6000009E8C7C63A8 |
| OC6E | 61020084CFD00058 |
| OC6F | 6045008D0C7C6390 |
| OC70 | 64B2108D84306598 |

| | |
|---|---|
| OC71 | 6042108D847063A0 |
| OC72 | 646210BD84306598 |
| OC73 | 6042108D85D00000 |
| OC74 | 64F5246006306668 |
| OC75 | 600108840FD00000 |
| OC76 | 647A10848E746428 |
| OC77 | 6000808D0C7C63D8 |
| OC78 | 6000009E8C306598 |
| OC79 | 64F5246006306668 |
| OC7A | 6000808D0DD00000 |
| OC7B | 6000009E8C7C63F0 |
| OC7C | 6000009E8C306810 |
| OC7D | 644A008684706528 |
| OC7E | 600108840FD00000 |
| OC7F | 64CA10848E746428 |
| OC80 | 6000009E8C7C6410 |
| OC81 | 644A068D85D00000 |
| OC82 | 6000009E8C306598 |
| OC83 | 64F5246006306668 |
| OC84 | 6000009E8C7063F0 |
| OC85 | 64B208848FD00000 |
| OC86 | 645A08848E746440 |
| OC87 | 6045008D0C7C6460 |
| OC88 | 6000009E8C306810 |
| OC89 | 6000009E8C7C6490 |
| OC8A | 6000009E8C3066A0 |
| OC8B | 6000108984706468 |
| OC8C | 6000046086306668 |
| OC8D | 600108840FD00000 |
| OC8E | 6000009E8C746440 |
| OC8F | 6045008D0C3065D8 |
| OC90 | 6000009E8C746450 |
| OC91 | 6000009E8C306810 |
| OC92 | 644A008685D00000 |
| OC93 | 64B208848FD00000 |
| OC94 | 645A08848E746528 |
| OC95 | 646A08848E746528 |
| OC96 | 646208848E7464C0 |
| OC97 | 6045008D0C7C6508 |
| OC98 | 61020084CFD00068 |
| OC99 | 6045008D0C7C64E0 |
| OC9A | 646210BD84306598 |
| OC9B | 6042108D84706528 |
| OC9C | 646208848FD00000 |
| OC9D | 6045008D0C746518 |
| OC9E | 6045008D0DD00000 |
| OC9F | 646A108D84306598 |
| OCA0 | 6042108D84706528 |
| OCA1 | 6000908D04306598 |

0134386

```
OCA2  6042108D84706528
OCA3  648210BD84306598
OCA4  6042108DB5D00000
OCA5  645210B48FD00000
OCA6  6045008D0C746548
OCA7  600108B40FD00000
OCA8  6045008D0C7C6570
OCA9  600010BD0430659B
OCAA  6042108DB4306810
OCAB  644A008685D00000
OCAC  6000046086306668
OCAD  6000009E8C706528
OCAE  6000009E8C3065DB
OCAF  64CA10848E74658B
OCB0  648A10848E7C66D0
OCB1  6045008D0C3066BB
OCB2  604A008D84706528
OCB3  6000009E8C7D6598
OCB4  7F050C882DD00000
OCB5  64F2128D847965C2
OCB6  7E46109E85D00000
OCB7  BF05008D0C7065C8
OCB8  DF05008D0DD0000C
OCB9  60000C8887D00000
OCBA  6001328D05500004
OCBB  64BA10848FD00000
OCBC  64BA10848F540000
OCBD  644A10848FD00000
OCBE  644A10848F540000
OCBF  648210848FD0000C
OCC0  648210848F540000
OCC1  647210848FD00000
OCC2  647210848F50000C
OCC3  6000046086306668
OCC4  64CA10848FD00000
OCC5  645A0B848E7C664B
OCC6  6000009E8C7C6648
OCC7  6045008D0C3066BB
OCC8  6000009E8C706620
OCC9  648A10848FD00000
OCCA  6000009E8D540000
OCCB  6000009E8C3066A0
OCCC  6000108984706620
OCCD  600100CD0D520000
OCCE  6000009E8C7D6670
OCCF  6001BA8027D00000

OCD0  E09A108D85D00006
OCD1  609D008D0DD00000
OCD2  7E1804BD847D6690
OCD3  7E5810CD85500000
OCD4  6000046086306668
OCD5  600070BD0430659B
OCD6  6000009E8D500000
OCD7  604C046006306668
OCD8  6042108D84306598
OCD9  64F5308905500000
OCDA  61020084CF54006E
OCDB  649A10848E7C673B
OCDC  64A210848E7465F0
OCDD  6462008D847C6700
OCDE  6045008D0C3066BB
OCDF  6000009E8C706748
OCE0  646A10848FD00000
OCE1  646210848E746718
OCE2  6000009E8C7C6798
OCE3  6044008D0C3066BB
OCE4  648A10848FD00000
OCE5  6000009E8D540000
OCE6  6000009E8C706798
OCE7  646A10848FD00000
OCE8  6482008D847C6768
OCE9  6045008D0C3066BB
OCEA  648A10848FD00000
OCEB  6000009E8D540000
OCEC  6000009E8C706798
OCED  6044008D0C3066BB
OCEE  648A10848FD00000
OCEF  6482008D85540000
OCF0  6044008D0C3066BB
OCF1  648A10848FD00000
OCF2  6000009E8D540000
OCF3  6000009E8C700848
OCF4  6002008D8DD00001
OCF5  7E80009E8C7C632B
OCF6  6002008D8DD00001
OCF7  7E80009E8C7C632B
OCF8  6002008D8DD00001
OCF9  7E80009E8C7C632B
OCFA  6002008D8DD00001
OCFB  7E80009E8C7C632B
OCFC  6002008D8DD00001
OCFD  7E80009E8C7C632B
```

```
OCFE  6000009E8C706618      OD2B  8552008D8D500006
OCFF  609A1A8D85D00000      OD2C  640A008684740848
OD00  640A1A8685D00000      OD2D  6412028D85D00004
OD01  6412188D85500004      OD2E  654C048845D0000B
OD02  60DA0084CFD00050      OD2F  6554208D0D500000
OD03  6001C08D0DD0000C      OD30  6000009E8C3068D8
OD04  6000009E8C72683C      OD31  6000009E8C7D6988
OD05  60000E88C5D0020C      OD32  654A0086EDD00170
OD06  6001D89245D00016      OD33  8552008D8C700766
OD07  6001988645D06848      OD34  6000009E8C3068B0
OD08  7EC0F88D0CD00000      OD35  6302008D84306960
OD09  6002008D80716869      OD36  6000009E8C304780
OD0A  6002008D80716879      OD37  654A0086EDD00100
OD0B  6002008D80716889      OD38  6552008D8DD00006
OD0C  6002008D807168A1      OD39  7F04008D0DD00000
OD0D  7F041C6007D00000      OD3A  8000009E8C700760
OD0E  7E5C008D85500000      OD3B  6000009E8C3068B0
OD0F  7F041C6007D00000      OD3C  6302008D84306960
OD10  7E7C008D85500000      OD3D  6000009E8C304780
OD11  7F041C6007D00000      OD3E  7F04008D0DD00000
OD12  6000EE8807D00000      OD3F  7E46008D85D00000
OD13  7E1C008D85500000      OD40  654A0086EDD00170
OD14  7F041C6007D00000      OD41  6552008D8DD00006
OD15  7E3C008D85500000      OD42  7F04008D0DD00000
OD16  6000009E8C301F48      OD43  A000009E8C700760
OD17  6000029185D00000      OD44  6000009E8C3068B0
OD18  60000A9184700C20      OD45  6302008D84306960
OD19  6000009E8C3068D8      OD46  6000009E8C304780
OD1A  6000009E8C700760      OD47  654A0086EDD00170
OD1B  6302008D85D00000      OD48  6552008D8DD00006
OD1C  63CA0086EDD00080      OD49  7F04008D0DD00000
OD1D  63D2008D8DD00006      OD4A  C000009E8C700760
OD1E  7F04008D0DD00000      OD4B  6000009E8C700848
OD1F  806C008D0C306960      OD4C  6000009E8C707FF0
OD20  6000009E8C7D6900      OFFE  7F48009E8DD00000
OD21  654A0086EDD00170      OFFF  7F40009E88100000
OD22  7F0442880DD00006
OD23  8000009E8DD00000
OD24  7E58048D847D6920
OD25  654A0086EDD00180
OD26  7F0442880DD00006
OD27  C014468845D00050
OD28  60D4608D0DD00000
OD29  6000009E8C7D6948
OD2A  654A0086EDD00100
```

The foregoing description of the invention has been directed to a particular preferred embodiment for purposes of explanation and illustration. It will be apparent, however, to those skilled in this art that the method in apparatus may be utilized for other program languages and COBOL. Also, it will be apparent that many modifications and changes in both apparatus and method may be made without departing from the scope of the invention. It is the applicant's intention of the following claims to cover all equivalent modifications and variations as fall within the scope of the invention.

0134386

CLAIMS:

1.  Apparatus for executing object code instructions compiled from a high-level language source characterized in that:

a host computer having a memory containing the compiled object code instructions;

said host computer executing in accordance with a stored emulator programonly object code instructions specifying low-level operations; and

a language processor activated by the host computer upon identification by the emulator programof an object code instruction specifying a high-level operation, for accessing the host computer memory and executing the high-level instruction.

2.  The apparatus of claim 1 wherein said host computer is operable in a multiprogramming mode, and wherein a second language processor is coupled to said language processor.

3.  Apparatus for executing object code instructions compiled from a high-level language source and including a procedure section, a data section, and a pseudo-machine context section, characterized in that:

a host computer having a memory containing the compiled object code instructions,

-51-

**0134386**

said host computer executing in accordance with a stored emulator programonly object code instructions specifying low-level operations;

a language processor coupled to the host computer over a system bus,

said language processor including a central processingunit (CPU), a control memory storing microcode commands for execution by the CPU, and a local data memory;

the CPU being activated upon identification by the emulator program in the host computer of an object code instruction specifying a high-level operation, and upon activation the CPU accessing the host computer memory to read information from the context section of the object code and store it in the local data memory, and thereafter the CPU accessing the host computer memory using an instruction pointer in the stored context section information to read the next instruction from the procedure section of the object code and execute the specified high-level operation.

4.   The apparatus of claim 3 wherein the CPU continues to execute instructions in the procedure section of the object code until an input/output instruction is identified.

5.    The apparatus of claim 4 wherein the CPU upon identifying an input/output instructionwrites the context
section information back into the host computer memory and
issues an interrupt to the host computer to re-activate
the emulator program.


6.    A language processor for coupling over a system bus
to a host computer having a memory containing object code
instructions compiled from a high-level language source
and including a procedure section, a data section, and a
pseudo-machine context section, said host computer executing in accordance with a stored emulator program
onlyobject code instructions specifying low-level operations, characterized in that:

        a central processing unit (CPU);

        a control memory storing microcode commands for
                execution by the CPU;

        a local data memory; and

        an interface register;

        said CPU being activated by the host computer to
                access the host computer memory and read
                information from the context section of the
                object code and store it in the local data
                memory;

        said CPU using an instruction pointer in the
                stored context section information to read
                the next instruction from the procedure
                section of the object code in the host computer memory and execute the specified high-level operation.

7. Method of executing object code instructions compiled from a high-level language source, characterized in that the steps of:

    providing compiled object code instructions in a host computer memory;

    executing in accordance with an emulator program stored in a host computer only object code instructions specifying low-level operations;

    activating a processor upon identification by the emulator program of an object

    code instruction specifying a high-level operation, to access the host computer memory and read the next object code instruction; and

    executing in the processor the high-level instruction defined by the object code instruction.

8. Method of executing object code instructions compiled from a high-level language source, characterized in that the steps of:

    providing compiled object code instructions in a host computer memory, said code including a procedure section, a data section, and a pseudo-machine context section;

executing in accordance with an emulator program stored in a host computer only object code instruction specifying low-level operations;

activating a central processing unit (CPU) coupled to the host computer upon identification by the emulator programof an object code instruction specifying a high-level operation;

accessing the host computer memory with the CPU to read information from the context section of the object code and store it in a local data memory;

accessing the host computer memory with the CPU and using an instruction pointer in the stored context section information to read the next instruction from the procedure section; and

executing in the CPU the high-level operation specified by the instruction.

9.  The method of claim 8 further characterized in that the steps of:

repeatedly accessing the host computer memory to read instructions for execution until an input/output instruction is identified;

0134386

writing the context section information back
into the host computer memory; and

issuing an interrupt to the host computer to
re-activate the emulator program.

0134386

1/4

**FIG. 2**

```
┌──────────┐  ┌──────────┐  ┌──────────┐  ┌──────────┐  ┌──────────┐
│ Host CPU │  │  Host    │  │ Language │  │ Language │  │   I/O    │
│          │  │  Memory  │  │Processor │  │Processor 2│  │ Interface│
└────┬─────┘  └────┬─────┘  └────┬─────┘  └────┬─────┘  └────┬─────┘
     │             │             │             │             │
─────┴─────────────┴─────────────┴─────────────┴─────────────┴──────
```

**FIG. 1**

```
┌──────────┐     ┌──────────┐     ┌──────────┐          ┌──────────┐
│ Source   │     │Compiler  │     │Object Code│         │Results in│
│ Program  │────▶│ Program  │────▶│  in      │         │   Host   │
│Statements│     │          │     │Host Memory│         │  Memory  │
└──────────┘     └──────────┘     └──────────┘          └──────────┘
                                            ╲            ╱      ▲
                                             ╲          ╱
                                    ┌──────────┐   ┌──────────┐
                                    │ Emulator │   │ Language │
                                    │ Program  │   │Processor │
                                    └──────────┘   └──────────┘
```

FIG. 3

FIG. 4

FIG. 5

4/4

0134386